(19) Europäisches Patentamt
European Patent Office
Office européen des brevets

(11) **EP 1 549 692 B1**

(12) **EUROPÄISCHE PATENTSCHRIFT**

(45) Veröffentlichungstag und Bekanntmachung des Hinweises auf die Patenterteilung:
**22.02.2012 Patentblatt 2012/08**

(21) Anmeldenummer: **03753492.2**

(22) Anmeldetag: **02.10.2003**

(51) Int Cl.:
*C08G 18/28* (2006.01)     *C08G 18/67* (2006.01)
*B82Y 30/00* (2011.01)     *C08G 18/38* (2006.01)
*C08G 18/80* (2006.01)

(86) Internationale Anmeldenummer:
**PCT/EP2003/010922**

(87) Internationale Veröffentlichungsnummer:
**WO 2004/035649 (29.04.2004 Gazette 2004/18)**

(54) **NANOPARTIKEL, VERFAHREN ZUR MODIFIZIERUNG IHRER OBERFLÄCHE, DISPERSION DER NANOPARTIKEL, VERFAHREN ZU IHRER HERSTELLUNG UND IHRE VERWENDUNG**

NANOPARTICLES, METHOD FOR MODIFYING THEIR SURFACES, DISPERSION OF NANOPARTICLES, METHOD FOR THE PRODUCTION AND THE UTILIZATION THEREOF

NANOPARTICULES, PROCEDE DE MODIFICATION DE LEUR SURFACE, DISPERSION DE TELLES NANOPARTICULES, LEUR PROCEDE DE PRODUCTION ET LEUR UTILISATION

(84) Benannte Vertragsstaaten:
**AT BE BG CH CY CZ DE DK EE ES FI FR GB GR HU IE IT LI LU MC NL PT RO SE SI SK TR**

(30) Priorität: **10.10.2002 DE 10247359**

(43) Veröffentlichungstag der Anmeldung:
**06.07.2005 Patentblatt 2005/27**

(73) Patentinhaber: **BASF Coatings GmbH**
**48165 Münster (DE)**

(72) Erfinder:
 • **POPPE, Andreas**
  **48324 Albersloh (DE)**
 • **WESTHOFF, Elke**
  **48565 Steinfurt (DE)**
 • **STÜBBE, Wilfried**
  **48268 Greven (DE)**
 • **GEBAUER, Beate**
  **48165 Münster (DE)**

 • **MAYENFELS, Peter**
  **48163 Münster (DE)**

(74) Vertreter: **Leifert & Steffan**
**Patentanwälte**
**Burgplatz 21-22**
**40213 Düsseldorf (DE)**

(56) Entgegenhaltungen:
**EP-A- 0 872 500     WO-A-97/38058**
**WO-A-02/062881**

 • **BAUER F ET AL: "Surface modification of nanoparticles for radiation curable acrylate clear coatings" NUCLEAR INSTRUMENTS & METHODS IN PHYSICS RESEARCH, SECTION - B: BEAM INTERACTIONS WITH MATERIALS AND ATOMS, NORTH-HOLLAND PUBLISHING COMPANY. AMSTERDAM, NL, Bd. 208, August 2003 (2003-08), Seiten 267-270, XP004438734 ISSN: 0168-583X**

EP 1 549 692 B1

**Beschreibung**

Die vorliegende Erfindung betrifft neue oberflächenmodifizierte Nanopartikel. Außerdem betrifft die vorliegende Erfindung neue Dispersionen der oberflächenmodifizierten Nanopartikel in aprotischen, insbesondere aprotisch unpolaren, Lösemitteln. Des weiteren betrifft die vorliegende Erfindung ein neues Verfahren zur Herstellung von oberflächenmodifizierten Nanopartikeln und ihren Dispersionen in aprotischen, insbesondere aprotisch unpolaren, Lösemitteln. Nicht zuletzt betrifft die vorliegende Erfindung die Verwendung der neuen oberflächenmodifizierten Nanopartikel und ihrer neuen Dispersion in aprotischen, insbesondere aprotisch unpolaren, Lösemitteln für die Herstellung von Beschichtungsstoffen, Klebstoffen, Dichtungsmassen, Compounds auf der Basis technischer Kunststoffe und härtbaren Massen für die Herstellung von Beschichtungen, Lackierungen, Klebschichten, Dichtungen, Formteilen, insbesondere optischen Formteilen, freitragenden Folien und Hartschäumen.

**Stand der Technik**

Nanopartikel, deren Oberlfäche mit primären Alkoholen wie n-Hexanol modifiziert worden sind, sind aus dem amerikanischen Patent US 4,652,470 A bekannt. Durch diese Modifizierung erhalten die Nanopartikel hydrophobe Eigenschaften, so dass sie in organischen Lösemitteln, wie sie üblicherweise in thermisch härtbaren Beschichtungsstoffen verwendet werden, dispergiert werden können. Die bekannten oberflächenmodifizierten Nanopartikel werden allerdings bei der Härtung der Beschichtungsstoffe nicht in die resultierenden dreidimensionalen Netzwerke der Beschichtungen eingebaut.

Nanopartikel, deren Oberfläche mit blockierte Isocyanatgruppen enthaltenden Silanen und hydrolisierbaren Silanen modifiziert worden ist, sind aus dem amerikanischen Patent US 5,998,504 A oder der europäischen Patentanmeldung EP 0 872 500 A1 bekannt. Die oberflächenmodifizierten Nanopartikel können in aprotisch polaren Lösemitteln wie Methoxypropylacetat dispergiert werden.

Allerdings müssen erhebliche Mengen an sekundären Alkoholen, insbesondere Isopropanol, zugegen sein, um die Agglomeration der Nanopartikel zu unterdrücken und die Dispersion zu stabilisieren.

Auch aus der DE 100 64 637 A1 und der DE 199 15 502 A1 sind anorganische Nanopartikel zur Verwendung in Zahnpflegemitteln bzw. zur Herstellung von Polynukleotidkomplexen zur Transfektion von Zellen bekannt, die an der Oberfläche mit Silanen bzw. Phosphorverbindungen modifiziert sind. Aufgrund der vorgegebenen Anwendungen sind die beschriebenen Partikel polaren Medien mit einer hohen Dielektrizitätskonstante stabilisiert. Somit kann davon ausgegangen werden, dass die Partikel zu einem gewissen Teil über elektrostatische Wechselwirkungen stabilisiert sind. Dies wird u. a. durch die Zeta-Potenziale, die in der DE 199 15 502 A1 angegeben sind, untermauert.da diese Art der Stabilisierung in aromatischen, unpolaren Lösungsmittel, wie z. B. Solventnaphtha oder anderen Lacklösemitteln aufgrund ihrer deutlich niedrigeren Dielektrizitätskonstantepraktisch nicht möglich ist, sind die in den genannten Anmeldungen beschriebenen Nanopartikel nicht für eine Anwendung in konventionellen Lacken nicht geeignet.

Aus der europäischen Patentanmeldung EP 0 832 947 A2 sind Nanopartikel bekannt, deren Oberfläche mit Carbamatgruppen enthaltenden Silanen modifiziert worden sind. Die Carbamatgruppen enthaltenden Silane werden hergestellt, indem man eine Isocyanatgruppe enthaltende Silane mit Hydroxypropylcarbamat umsetzt. Die oberflächenmodifizierten Nanopartikel werden in wasserhaltigen, aprotisch polaren Lösemitteln dispergiert.

Die bekannten Beschichtungen mögen zwar im Vergleich zu den nanopartikelfreien Beschichtungen in der Kratzfestigkeit verbessert sein, ihre Chemikalien- und Säurebeständigkeit lassen jedoch weiter zu wünschen übrig. Die bekannten Dispersionen der oberflächenmodifizierten Nanopartikel sind außerdem nicht für die Herstellung von Zweikomponentenbeschichtungsstoffen auf der Basis von Polyisocyanaten geeignet, da sie sehr rasch mit den Polyisocyanaten reagieren und Gele bilden, was zu Trübungen und Stippen in den hieraus hergestellten Beschichtungen führt. Dies liegt zum einen an der weiterhin hohen Reaktivität der oberflächenmodizifierten Nanopartikel und/oder der Reaktivität der zur Stabilisierung der Dispersionen notwendigen sekundären Alkohole gegenüber Polyisocyanaten.

**Aufgabe der Erfindung**

Der vorliegenden Erfindung lag die Aufgabe zugrunde, neue oberflächenmodifizierte Nanopartikel bereitzustellen, die sich problemlos in aprotischen, insbesondere aprotisch unpolaren, organischen Lösemitteln und/oder olefinisch ungesättigten Monomeren (Reaktivverdünner) dispergieren lassen. Die neuen Dispersionen der oberflächenmodifizierten Nanopartikel sollen auch bei Festkörpergehalten von über 50 Gew.-% lagerstabil sein und nicht zum Sedimentieren neigen. Sowohl die neuen oberflächenmodifizierten Nanopartikel als auch ihre neuen Dispersionen in aprotischen, insbesondere unpolaren, Lösemitteln und/oder olefinisch ungesättigten Monomeren (Reaktivverdünner) sollen mit Polyisocyanaten keine unerwünschten Reaktionen, wie eine vorzeitige Bildung von Gelen, eingehen. Dabei sollen sie aber eine genügend hohe Reaktionsfähigkeit aufweisen, um mit anderen reaktiven funktionellen Gruppen als Isocyanatgruppen thermisch, radikalisch, kationisch und/oder photochemisch initiierte Vernetzungsreaktionen oder Polymerisationsreaktionen einzugehen.

Dabei sollen sich die neuen oberflächenmodifizierten Nanopartikel und ihre Dispersionen in einfacher Weise herstellen lassen, ohne dass hierfür aufwändige Verfahren notwendig werden.

Die neuen oberflächenmodifizierten Nanopartikel und ihre Dispersionen in aprotischen, insbesondere aprotisch unpolaren Lösemitteln und/oder olefinisch ungesättigten Monomeren (Reaktiwerdünner), sollen außerdem hervorragend für die Herstellung von thermisch und/oder mit aktinischer Strahlung härtbaren Massen, Beschichtungsstoffen, speziell Zweikomponentenbeschichtungsstoffen auf der Basis von Polyisocyanaten, Klebstoffen und Dichtungsmassen sowie von Compounds auf der Basis technischer Kunststoffe geeignet sein.

Die thermisch und/oder mit aktinischer Strahlung härtbaren Massen, Beschichtungsstoffe, Klebstoffe und Dichtungsmassen sollen einfach herzustellen und lagerstabil sein. Vor allem sollen sie keine unerwünschten Gele bilden. Die Compounds auf der Basis technischer Kunststoffe sollen ebenfalls in einfacher Weise nach üblichen und bekannten Verfahren der Kunststoffverarbeitung herstellbar sein. Die Beschichtungsstoffe, Klebstoffe und Dichtungsmassen sollen sich hervorragend für die Herstellung von Beschichtungen, Lackierungen, Klebschichten und Dichtungen eignen. Die härtbaren Massen und die Compounds auf der Basis technischer Kunststoffe sollen sich gleichermaßen hervorragend für die Herstellung von Formteilen, insbesondere optischen Formteilen, frei tragenden Folien und Hartschäumen eignen.

Die neuen Beschichtungen, Lackierungen, Klebschichten, Dichtungen, Formteile, frei tragenden Folien und Hartschäume sollen nicht nur kratzfest, sondern auch chemikalienstabil und säurestabil sein. Außerdem sollen die neuen Beschichtungen, Lackierungen, Klebschichten, Dichtungen, optischen Formteile und frei tragenden Folien im Bedarfsfall völlig transparent und klar sein und keine Trübungen oder Stippen aufweisen. Ihre Oberfläche soll außerdem glatt und frei von Oberflächenstörungen sein.

Außerdem war es die Aufgabe der vorliegenden Erfindung ein neues Verfahren zur Herstellung von oberflächenmodifizierten Nanopartikeln bereitzustellen, das in einfacher Weise durchgeführt werden und stofflich besonders breit variiert werden kann, so dass neue oberflächenmodifizierte Nanopartikel für besonders zahlreiche Anwendungszwecke maßgeschneidert werden können. Nicht zuletzt soll das neue Verfahren oberflächenmodifizierte Nanopartikel liefern, die sich leicht in aprotischen, insbesondere aprotisch unpolaren Lösemitteln, wie sie beispielsweise für die Herstellung von Zweikomponentenbeschichtungsstoffen verwendet werden, und/oder olefinisch ungesättigten Monomeren (Reaktivverdünner) dispergieren lassen.

## Die erfindungsgemäße Lösung

Demgemäß wurden die neuen oberflächenmodifizierten Nanopartikel gefunden, deren Oberfläche nahezu vollständig oder vollständig mit

(A) modifizierenden Gruppen, die

- über verküpfende funktionelle Gruppen (a) kovalent an die Oberfläche gebunden sind und
- abstandshaltende, inerte Gruppen (b) und
- über die Gruppen (b) mit den Gruppen (a) verbundene, reaktive funktionelle Gruppen (c), die gegenüber den reaktiven funktionellen Gruppen der zu modifizierenden Oberfläche inert sind, enthalten,

(B) modifizierenden Gruppen, die

- über verküpfende funktionelle Gruppen (a) kovalent an die Oberfläche gebunden sind und
- inerte Gruppen (d) mit einem kleineren hydrodynamischen Volumen $V_H$ als das der abstandshaltenden, inerten Gruppen (Ab) enthalten, und

(C) modifizierenden Gruppen, die

- über verküpfende funktionelle Gruppen (a), die mindestens ein Siliziumatom enthält, an die Oberfläche gebunden sind,
- inerte Gruppen (e) enthalten und
- ein kleineres hydrodynamisches Volumen $V_H$ als die modifizierende Gruppen (A) aufweisen:

bedeckt ist und die im Folgenden als "erfindungsgemäße Nanopartikel" bezeichnet werden.

Außerdem wurden die neuen Dispersionen von oberflächenmodifizierten Nanopartikeln gefunden, die durch Dispergieren von erfindungsgemäßen Nanopartikeln in aprotischen Lösemitteln und/oder Reaktivverdünnern herstellbar sind, und die folgenden als "erfindungsgemäße Dispersionen" bezeichnet werden.

Weitere Erfindungsgegenstände ergeben sich aus der Beschreibung.

### Die Vorteile der erfindungsgemäßen Lösung

Im Hinblick auf den Stand der Technik war es überraschend und für den Fachmann nicht vorhersehbar, dass die Aufgabe, die der vorliegenden Erfindung zugrundelag, mit Hilfe der erfindungsgemäßen Nanopartikel, der erfindungsgemäßen Dispersionen und des erfindungsgemäßen Herstellverfahrens gelöst werden konnte.

Insbesondere war es überraschend, dass sich die erfindungsgemäßen Nanopartikel problemlos in aprotischen, insbesondere aprotisch unpolaren, organischen Lösemitteln und/oder olefinisch ungesättigten Monomeren (Reaktiwerdünner) dispergieren ließen. Die erfindungsgemäßen Dispersionen Nanopartikel waren überraschenderweise auch bei Festkörpergehalten von über 50 Gew.-% lagerstabil und neigten nicht zum Sedimentieren.

Sowohl die erfindungsgemäßen Nanopartikel als auch ihre erfindungsgemäßen Dispersionen in aprotischen, insbesondere aprotisch unpolaren Lösemitteln und/oder olefinisch ungesättigten Monomeren (Reaktiwerdünner) gingen mit Polyisocyanaten keine unerwünschten Reaktionen, wie eine vorzeitige Bildung von Gelen, ein. Dabei wiesen sie aber eine genügend hohe Reaktionsfähigkeit auf, um mit anderen reaktiven funktionellen Gruppen als Isocyanatgruppen thermisch, radikalisch, kationisch und/oder photochemisch initiierte Vernetzungsreaktionen oder Polymerisationsreaktionen einzugehen.

Die erfindungsgemäßen Nanopartikel und die erfindungsgemäßen Dispersionen ließen sich in einfacher Weise herstellen, ohne dass hierfür aufwändige Verfahren notwendig waren.

Die erfindungsgemäßen Nanopartikel und die erfindungsgemäßen Dispersionen waren außerdem hervorragend für die Herstellung von thermisch und/oder mit aktinischer Strahlung härtbaren Massen, Beschichtungsstoffen, speziell Zweikomponentenbeschichtungsstoffen auf der Basis von Polyisocyanaten, Klebstoffen und Dichtungsmassen sowie von Compounds auf der Basis technischer Kunststoffe geeignet.

Die erfindungsgemäßen, thermisch und/oder mit aktinischer Strahlung härtbaren Massen, Beschichtungsstoffe, Klebstoffe und Dichtungsmassen waren einfach herzustellen und lagerstabil. Vor allem bildeten sie keine unerwünschten Gele. Die erfindungsgemäßen Compounds auf der Basis technischer Kunststoffe waren ebenfalls in einfacher Weise nach üblichen und bekannten Verfahren der Kunststoffverarbeitung herstellbar. Die erfindungsgemäßen Beschichtungsstoffe, Klebstoffe und Dichtungsmassen eigneten sich hervorragend für die Herstellung von Beschichtungen, Lackierungen, Klebschichten und Dichtungen. Die erfindungsgemäßen härtbaren Massen und Compounds auf der Basis technischer Kunststoffe eigneten sich gleichermaßen hervorragend für die Herstellung von Formteilen, insbesondere optischen Formteilen, frei tragenden Folien und Hartschäumen.

Die erfindungsgemäßen Beschichtungen, Lackierungen, Klebschichten, Dichtungen, Formteile, frei tragenden Folien und Hartschäume waren nicht nur kratzfest, sondern auch chemikalienstabil und säurestabil. Außerdem waren die erfindungsgemäßen Beschichtungen, Lackierungen, Klebschichten, Dichtungen, optischen Formteile und frei tragenden Folien im Bedarfsfall völlig transparent und klar und wiesen keine Trübungen oder Stippen auf. Ihre Oberfläche war außerdem glatt und frei von Oberflächenstörungen.

Das erfindungsgemäße Herstellverfahren für die erfindungsgemäßen Nanopartikel und Dispersionen konnte in einfacher Weise durchgeführt und stofflich besonders breit variiert werden, so dass sich erfindungsgemäße Nanopartikel für besonders zahlreiche Anwendungszwecke maßschneidern ließen. Nicht zuletzt lieferte das erfindungsgemäße Herstellverfahren oberflächenmodifizierte Nanopartikel, die sich leicht in aprotischen, insbesondere aprotisch unpolaren, Lösemitteln, wie sie beispielsweise für die Herstellung von Zwei- und Mehrkomponentenbeschichtungsstoffen verwendet werden, und/oder in olefinisch ungesättigten Monomeren (Reaktivverdünner) dispergieren ließen.

### Ausführliche Beschreibung

Für die erfindungsgemäßen Nanopartikel ist es wesentlich, dass ihre Oberfläche nahezu vollständig oder vollständig mit modifizierenden Gruppen bedeckt ist. »Nahezu vollständig oder vollständig bedeckt« bedeutet, dass die Oberfläche der erfindungsgemäßen Nanopartikel so weit bedeckt ist, wie es die sterischen Bedürfnisse der einzelnen modifizierenden Gruppen zulassen, und dass die reaktiven funktionellen Gruppen, die sich gegebenenfalls noch auf der Oberfläche der erfindungsgemäßen Nanopartikel befinden, sterisch abgeschirmt und so Reaktionen mit beispielsweise Polyisocyanaten entzogen werden.

Die Oberfläche der erfindungsgemäßen Nanopartikel sind mit mindestens drei, insbesondere drei, verschiedenen Klassen von modifizierenden Gruppen bedeckt.

Erfindungsgemäß handelt es sich bei der ersten Klasse um modifizierende Gruppen (A), die über mindestens eine, vorzugsweise mindestens zwei und insbesondere drei, verküpfende funktionelle Gruppe(n) (Aa) kovalent an die Oberfläche gebunden sind. Vorzugsweise sind die Gruppen (Aa) unter den Bedingungen der Anwendung der erfindungsgemäßen Nanopartikeln inert. Bevorzugt enthalten die verküpfenden funktionellen Gruppen (Aa) mindestens ein, insbesondere ein, Siliziumatom. Besonders bevorzugt handelt es sich bei den verküpfenden funktionellen Gruppen (Aa) um Siloxangruppen.

Die Gruppen (A) enthalten mindestens eine, insbesondere eine, abstandshaltende inerte Gruppe (b).

»Inert« bedeutet bezüglich der Gruppe (Ab) hier und im Folgenden, dass sie unter den Bedingungen der Herstellung und der Anwendung der erfindungsgemäßen Nanopartikel keine Reaktionen eingeht (vgl. auch, Roempp Online, Georg Thieme Verlag, Stuttgart, New York, 2002, »Inert«).

Vorzugsweise handelt es sich bei der abstandshaltenden, interten Gruppe (Ab) um mindestens einen zweibindigen, insbesondere zweibindigen, organischen Rest R, der bevorzugt aus der Gruppe, bestehend aus aliphatischen, cycloaliphatischen, aromatischen, aliphatisch-cycloaliphatischen, aliphatisch-aromatischen, cycloaliphatisch-aromatischen und aliphatisch-cycloaliphatisch-aromatischen Resten, ausgewählt wird. Dabei können die Reste R mehr als eine der genannten Struktureinheiten enthalten.

Die Reste R können des Weiteren mindestens mindestens eine mindestens zweibindige, insbesondere zweibindige, funktionelle Gruppe und/oder mindestens einen Substituenten enthalten. Wesentlich ist, dass die zweibindigen funktionellen Gruppen und die Substituenten im vorstehend genannten Sinne inert sind. Beispiele geeigneter zweibindige funktioneller Gruppe sind die nachstehend beschriebenen verküpfenden funktionellen Gruppen (Ba). Beispiele geeigneter Substituenten sind Halogenatome, insbesondere Fluoratome und Chloratome, Nitrilgruppen, Nitrogruppen oder Alkoxygruppen. Vorzugsweise sind die Reste R unsubstituiert.

Die modifizierende Gruppe (A) enthält darüber hinaus mindestens eine, insbesondere eine, über die Gruppe (Ab) mit der Gruppe (a) verbundene, reaktive funktionelle Gruppe (Ac), die unter den Bedingungen der Herstellung der erfindungsgemäßen Nanopartikel gegenüber den reaktiven funktionellen Gruppen der zu modifizierenden Oberfläche inert (vgl. auch , Roempp Online, Georg Thieme Verlag, Stuttgart, New York, 2002, »Inert«) ist. Indes ist die reaktive funktionelle Gruppe (Ac) unter den Bedingungen der Anwendung der erfindungsgemäßen Nanopartikel nicht inert, sondern reaktiv. Insbesondere kann sie thermisch und/oder mit aktinischer Strahlung aktiviert werden, sodass sie thermisch und/oder mit aktinischer Strahlung initiierte Reaktionen, wie Kondensationsreaktionen oder Additionsreaktionen, die nach radikalischen, kationischen oder anionischen Mechanismen ablaufen können, eingehen kann.

Hier und im Folgenden wird unter aktinischer Strahlung elektromagnetische Strahlung, wie nahes Infrarot (NIR), sichtbares Licht, UV-Strahlung, Röntgenstrahlung oder Gammastrahlung, insbesondere UV-Strahlung, und Korpuskularstrahlung, wie Elektronenstrahlung oder Neutronenstrahlung, insbesondere Elektronenstrahlung, verstanden.

Beispiele geeigneter thermisch aktivierbarer, reaktiver funktioneller Gruppe (Ac) sind Epoxidgruppen und blokkierte Isocyanatgruppen, insbesondere blockierte Isocyanatgruppen der allgemeinen Formel I:

$$-NH-\ C\ (X)-R1 \qquad (I),$$

worin die Variable X für ein Sauerstoffatom oder ein Schwefelatom, insbesondere ein Sauerstoffatom, steht und die Variable R1 für den Rest eines Blockierungsmittels wie es üblicherweise für die Blockierung von Isocyanatgruppen verwendet wird. Beispiele geeigneter Blockierungsmittel sind

i) Phenole wie Phenol, Cresol, Xylenol, Nithrophenol, Chlorophenol, Ethylphenol, t-Butylphenol, Hydroxybenzoesäure, Ester dieser Säure oder 2,5-di-tert.-Butyl-4-hydroxytoluol;

ii) Lactame, wie ε-Caprolactam, ö-Valerolactam, γ-Butyrolactam oder β-Propio-lactam;

iii) aktive methylenische Verbindunge, wie Dethylmalonat, Dimethylmalonat, Acetessigsäureehtyl- oder methylester oder Acetylaceton;

iv) Alkohole wie Methanol, Ethanol, n-Propanol, Isopropanol, n-Butanol, Isobutanol, t-Butanol, n-Amylalkohol, t-Amylalkohol, Laurylalkohol, Ethylenglykolmonomethylether, Ethylenglykolmonoethylether, Ethylenglykolmonopropylether, Ethylenglykolmonobutylether, Diethylenglykolmonomethylether, Diethylenglykolmonoethylether, Propylenglykolmonomethylether, Methoxymethanol, Glykolsäure, Glykolsäureester, Milchsäure,' Milchsäureester, Methylolharnstoff, Methylolmelamin, Diacetonalkohol, Ethylenchlorohydrin, Ethylenbromhydrin, 1,3-Dichloro-2-propanol, 1,4-Cyclohexyldimethanol oder Acetocyanhydrin;

v) Mercaptane wie Butylmercaptan, Hexylmercaptan, t-Butylmercaptan, t-Dodecylmercaptan, 2-Mercaptobenzothiazol, Thiophenol, Methylthiophenol oder Ethylthiophenol;

vi) Säureamide wie Acetoanilid, Acetoanisidinamid, Acrylamid, Methycrylamid, Essigsäureamid, Stearinsäureamid oder Benzamid;

vii) Imide wie Succinimid, Phthalimid oder Maleimid;

viii) Amine wie Diphenylamin, Phenylnnnaphthylamin, Xylidin, N-Phenylxylidin, Carbazol, Anilin, Naphthylamin, Butylamin, Dibutylamin oder Butylphenylamin;

ix) Imidazole wie Imidazol oder 2-Ethylimidazol;

x) Harnstoffe wie Harnstoff, Thioharnstoff, Ethylenharnstoff, Ethylenthioharnstoff oder 1,3-Diphenylharnstoff;

xi) Carbamate wie N-Phenylcarbamidsäurephenylester oder 2-Oxazolidon;

xii) Imine wie Ethylenimin;

xiii) Oxime wie Acetonoxim, Formaldoxim, Acetaldoxim, Acetoxim, Methylethylketoxim, Düsobutylketoxim, Diacetylmonoxim, Benzophenonoxim oder Chlorohexanonoxime;

xiv) Salze der schwefeligen Säure wie Natriumbisulfit oder Kaliumbisulfit;

xv) Hydroxamsäureester wie Benzylmethacrylohydroxamat (BMH) oder Allylmethacrylohydroxamat; oder

xvi) Substituierte Pyrazole, insbesondere Dimethylpyrazole, Imidazole oder Triazole; sowie

xvii) Gemische dieser Blockierungsmittel, insbesondere Dimethylpyrazol und Succinimid.

Beispiele geeigneter, mit aktinischer Strahlung aktivierbarer, reaktiver funktioneller Gruppen (Ac) sind Gruppen, die mindestens eine, insbesondere eine, mit aktinischer Strahlung aktivierbare Bindung enthalten. Beispiele geeigneter mit aktinischer Strahlung aktivierbare Bindungen sind Kohlenstoff-Wasserstoff-Einzelbindungen oder Kohlenstoff-Kohlenstoff-, Kohlenstoff-Sauerstoff-, Kohlenstoff-Stickstoff , Kohlenstoff-Phosphor- oder Kohlenstoff-Silizium-Einzelbindungen oder - Doppelbindungen und Kohlenstoff-Kohlenstoff-Dreifachbindungen. Von diesen werden die Doppelbindungen, insbesondere die Kohlenstoff Kohlenstoff-Doppelbindungen (nachstehend "Doppelbindungen" genannt, bevorzugt angewandt.

Gut geeignete Doppelbindungen liegen beispielsweise in (Meth)Acrylat-, Ethacrylat-, Crotonat-, Cinnamat-, Vinylether-, Vinylester-, Ethenylarylen-, Dicyclopentadienyl-, Norbornenyl-, Isoprenyl-, Isoprenyl-, Isopropenyl-, Allyloder Butenylgruppen; Ethenylarylen-, Dicyclopentadienyl-, Norbornenyl-, Isoprenyl-, Isopropenyl-, Allyl- oder Butenylethergruppen oder Ethenylarylen-, Dicyclopentadienyl-, Norbornenyl-, Isoprenyl-, Isopropenyl-, Allyl- oder Butenylestergruppen vor. Von diesen sind (Meth)Acrylatgruppen, insbesondere Acrylatgruppen, von besonderem Vorteil und werden deshalb ganz besonders bevorzugt verwendet.

Erfindungsgemäß handelt es sich bei der zweiten Klasse um modifizierende Gruppen (B), die über mindestens eine verküpfende funktionelle Gruppe (Ba) kovalent an die Oberfläche der zu modifizierenden Nanopartikel gebunden sind. Vorzugsweise werden Gruppen (Ba) verwendet, die unter den Bedingungen der Anwendung der erfindungsgemäßen Nanopartikel inert sind. Die bevorzugt werden die Gruppen (Ba) aus der Gruppe, bestehend aus Ether-, Thioether-, Carbonsäureester-, Thiocarbonsäureester-, Carbonat-, Thiocarbonat-, Phosphorsäureester-, Thiophosphorsäureester-, Phosphonsäureester-, Thiophosphonsäureester-, Phosphit-, Thiophosphit-, Sulfonsäureester-, Amid-, Amin-, Thioamid-, Phosphorsäureamid-, Thiophosphorsäureamid-, Phosphonsäureamid-, Thiophosphonsäureamid-, Sulfonsäureamid-, Imid-, Hydrazid-, Urethan-, Harnstoff-, Thioharnstoff-, Carbonyl-, Thiocarbonyl-, Sulfon- oder Sulfoxidgruppen, ausgewählt. Besonders bevorzugt sind Ethergruppen.

Außerdem enthalten die modifizierende Gruppen (B) mindestens eine, insbesondere eine, über die Gruppe (Ba) mit der Oberfläche verknüpfte inerte Gruppe (Bd). Die Gruppe (Bd) ist wie die Gruppe (Ab) unter den Bedingungen der Herstellung und der Verwendung der erfindungsgemäßen Nanopartikel inert. Vorzugsweise sind die Gruppen (Bb) einbindige organische Reste $R^2$. Bevorzugt werden sie aus der Gruppe, bestehend aus aliphatischen, cycloaliphatischen, aromatischen, aliphatisch-cycloaliphatischen, aliphatisch-aromatischen, cycloaliphatisch-aromatischen oder aliphatisch-cycloaliphatisch-aromatischen Resten, ausgewählt. Sie können die vorstehend beschriebenen mindestens zweibindigen funktionellen Gruppen und/oder Substituenten enthalten.

Wesentlich ist, dass die inerten Gruppen (Bd) ein kleineres hydrodynamisches Volumen $V_H$ als die abstandshaltenden, inerten Gruppen (Ab) haben. Das hydrodynamische Volumen $V_H$ ist mit Hilfe der Photonenkorrelationsspektroskopie bestimmbar oder über die Beziehung

$$V_H = (r_{cont}/2)^3,$$

worin $r_{cont}$ die effektive Konturlänge eines Moleküls bedeutet, abschätzbar. Ergänzend wird auf das Lehrbuch von H.-G- Elias, »Makromoleküle«, Hüthig & Wepf Verlag, Basel, Band 1,»Grundlagen«, Seite 51, verwiesen.

Erfindungsgemäß handelt es sich bei der dritten Klasse um modifizierende Gruppen (C), die über mindestens eine, insbesondere eine, verküpfende funktionelle Gruppen (Ca) Gruppen kovalent an die Oberfläche der erfindungsgemäßen Nanopartikel gebunden sind. Vorzugsweise sind die Gruppen (Ca) unter den Bedingungen der Anwendung der erfindungsgemäßen Nanopartikeln inert. Bevorzugt enthalten die verküpfenden funktionellen Gruppen (Ca) mindestens ein, insbesondere ein, Siliziumatom. Besonders bevorzugt handelt es sich bei den verküpfenden funktionellen Gruppe (Ca) um Siloxangruppen.

Außerdem enthalten die modifizierenden Gruppen (C) mindestens eine, vorzugsweise mindestens zwei und insbesondere mindestens drei über die Gruppe (Ca) mit der Oberfläche verknüpfte inerte Gruppe(n) (Ce). Die Gruppe (Ce) ist wie die Gruppe (Bd) oder (Aa) unter den Bedingungen der Herstellung und der Verwendung der erfindungsgemäßen Nanopartikel inert. Vorzugsweise sind die Gruppen (Ce) einbindige organische Reste $R^2$. Bevorzugt werden sie aus der Gruppe, bestehend aus aliphatischen, cycloaliphatischen, aromatischen, aliphatisch-cycloaliphatischen, aliphatisch-aromatischen, cycloaliphatisch-aromatischen oder aliphatisch-cycloaliphatisch-aromatischen Resten, ausgewählt. Sie können die vorstehend beschriebenen mindestens zweibindigen funktionellen Gruppen und/oder Substituenten enthalten.

Wesentlich ist, dass die Gruppen (C) ein kleineres hydrodynamisches Volumen $V_H$ als die modifizierenden Gruppen (A) haben.

Das Gewichtsverhältnis der modifizierenden Gruppen (A) : (B) : (C) kann breit variieren und richtet sich nach den Erfordernissen des Einzelfalls. Das Gewichtsverhältnis (A) : (B) : (C) liegt

- vorzugsweise bei (4 bis 200) : (0,1 bis 60) : 1,

- bevorzugt bei (7 bis 100) : (0,2 bis 15) : 1 und

- insbesondere bei (10 bis 50) : (0,5 bis 10) : 1.

Die erfindungsgemäßen Nanopartikeln können nach den üblichen und bekannten Methoden der organischen und der siliziumorganischen Chemie hergestellt werden, indem beispielsweise geeignete Silane mit hydrolysierbaren Gruppen gemeinsam hydrolysiert und kondensiert werden oder zu modifizierende Nanopartikel mit geeigneten organischen Verbindungen und Silanen mit hydrolysierbaren Gruppen umgesetzt werden.

Vorzugsweise werden die erfindungsgemäßen Nanopartikel durch die Umsetzung der reaktiven funktionellen Gruppen der Oberfläche von zu modifizierenden Nanopartikeln mit den nachstehend beschriebenen Modifizierungsmitteln hergestellt. Beispiele geeigneter reaktiver funktioneller Gruppen sind Säuregruppen, wie Carboxylgruppen, Sulfonsäuregruppen oder Phosphorsäuregruppen, oder Hydroxylgruppen, insbesondere Hydroxylgruppen.

Erfindungsgemäß werden die zu modifizierenden Nanopartikel mit mindestens einem Modifizierungsmittel (A) umgesetzt.

Das Modifizierungsmittel (A) enthält mindestens eine, vorzugsweise mindestens zwei und insbesondere mindestens drei reaktive funktionelle Gruppen (Aa), die gegenüber den reaktiven funktionellen Gruppen der zu modifizierenden Oberfläche reaktiv sind. Vorzugsweise enthält die reaktive funktionelle Gruppe (Aa) mindestens ein, insbesondere ein, Siliziumatom. Reaktive funktionelle Gruppen (Aa) sind üblich und bekannt und können vom Fachmann anhand der komplementären reaktiven funktionellen Gruppen auf der zu modifizierenden Oberfläche ausgewählt werden.

Das Modifizierungsmittel (A) enthält desweiteren mindestens eine, vorzugsweise eine, der vorstehend beschriebenen, abstandhaltenden, inerten Gruppen (Ab). Diese sind mit den reaktiven funktionellen Gruppen (Aa) kovalent verknüpft.

Außerdem enthält das Modifizierungsmittel mindestens eine, insbesondere eine, der vorstehend beschriebenen, über die Gruppe (Ab) mit der Gruppe (Aa) verbundenen, reaktiven funktionellen Gruppen (Ac), die gegenüber den reaktiven funktionellen Gruppen der zu modifizierenden Oberfläche inert sind.

Erfindungsgemäß werden die zu modifizierenden Nanopartikel außerdem mit mindestens einem Modifizierungsmittel (B) umgesetzt.

Das Modifizierungsmittel (B) enthält mindestens eine, insbesondere eine, reaktive funktionelle Gruppe (Ba), die gegenüber den reaktiven funktionellen Gruppen der zu modifizierenden Oberfläche reaktiv sind. An und für sich kann es sich bei den reaktiven funktionellen Gruppen (Ba) um die vorstehend beschriebenen reaktiven funktionellen Gruppen (Aa) handeln. Vorzugsweise werden aber die reaktiven funktionellen Gruppen (Ba) aus der Gruppe, bestehend aus den Vorstufen der verküpfenden funktionellen Gruppen (Ba), vorzugsweise aus Ether-, Thioether-, Carbonsäureester-, Thiocarbonsäureester-, Carbonat-, Thiocarbonat-, Phosphorsäureester-, Thiophosphorsäureester-, Phosphonsäureester-, Thiophosphonsäureester-, Phosphit-, Thiophosphit-, Sulfonsäureester-, Amid-, Amin-, Thioamid-, Phosphorsäureamid-, Thiophosphorsäureamid-, Phosphonsäureamid-, Thiophosphonsäureamid-, Sulfonsäureamid-, Imid-, Hydrazid-, Urethan-, Harnstoff-, Thioharnstoff-, Carbonyl-, Thiocarbonyl-, Sulfon- oder Sulfoxidgruppen (Ba), insbesondere von Ethergruppen (Ba), ausgewählt. Die reaktiven funktionellen Gruppen (Ba) sind übliche und bekannte reaktive funktionelle Gruppen der organischen Chemie und können daher vom Fachmann leicht aufgrund seines Fachwissens ausgewählt werden.

Das Modifizierungsmittel (B) enthält außerdem mindestens eine, insbesondere eine, der vorstehend beschriebenen inerten Gruppen (Bd) mit einem kleineren hydrodynamischen Volumen $V_H$ als das der der vorstehend beschriebenen abstandhaltenden, inerten Gruppe (Ab). Vorzugsweise ist die Gruppe (Bd) mit der reaktiven funktionellen Gruppe (Ba) direkt verknüpft.

Erfindungsgemäß werden die zu modifizierenden Nanopartikel noch mit mindestens einem Modifizierungsmittel (C) mit einem kleineren hydrodynamischen Volumen $V_H$ als das Modifizierungsmittel (A) umgesetzt.

Das Modifizierungsmittel (C) enthält mindestens eine reaktive funktionelle Gruppe (Ca), die mindestens ein, insbesondere ein, Siliziumatom enthält und gegenüber den reaktiven funktionelle Gruppen der zu modifizierenden Oberfläche reaktiv ist.

Außerdem enthält das Modifizierungsmittel (C) mindestens eine, vorzugsweise mindestens zwei und insbesondere drei der vorstehend beschriebenen inerten Gruppen (Ce), die vorzugsweise direkt mit der reaktiven funktionellen Gruppe (Ca) verknüpft ist oder sind.

Bevorzugt werden die Modifizierungsmittel (A) aus der Gruppe, bestehend aus Silanen der allgemeinen Formel II:

$$[(R^2)_o(R^3)_{3-o}Si]_mR(Ac)_n \qquad \text{(II)},$$

worin die Indizes und die Variablen die folgende Bedeutung haben:

m und n     ganze Zahlen von 1 bis 6, vorzugsweise 1 bis 5 und insbesondere 1 bis 3;

o     0, 1 oder 2, insbesondere 0;

Ac     thermisch und/oder mit aktinischer Strahlung aktivierbare Gruppe, wie vorstehend definiert;

R     mindestens zweibindiger organischer Rest, wie vorstehend definiert;

$R^2$     einbindiger organischer Rest, wie vorstehend definiert, und

$R^3$     hydrolysierbares Atom oder hydrolysierbare Gruppe;

ausgewählt.

Vorzugsweise wird das hydrolysierbare Atom $R^3$ aus der Gruppe, bestehend aus Wasserstoffatomen, Fluoratomen, Chloratomen und Bromatomen und die hydrolysierbare Gruppe $R^3$ aus der Gruppe, bestehend aus Hydroxylgruppen und einbindigen organischen Resten $R^4$ ausgewählt.

Vorzugsweise wird der einbindige organische Rest $R^4$ aus der Gruppe, bestehend aus Gruppen der allgemeinen Formel III:

$$\text{-Y- R2} \qquad \text{(III)},$$

worin die Variable Y für ein Sauerstoffatom oder eine Carbonylgruppe, Carbonyloxygruppe, Oxycarbonylgruppe, Aminogruppe -NH- oder sekundäre Aminogruppe $-NR^2-$, insbesondere ein Sauerstoffatom, steht und die Variable $R^2$ die vorstehend angegebene Bedeutung hat; ausgewählt.

Bevorzugt wird der hydrolysierbare, einbindige organische Rest $R^4$ aus der Gruppe, bestehend aus unubstituierten Alkoxyresten mit 1 bis 4 Kohlenstoffatomen im Alkylrest, ausgewählt.

Die Silane (A) sind an sich bekannte Verbindungen und können nach den üblichen und bekannten Verfahren der siliziumorganischen Chemie hergestellt werden. Vorzugsweise sind die Silane (A) erhältlich durch

(1) die Umsetzung von Polyisocyanaten mit Blockierungsmitteln, wie die vorstehend beschriebenen, und mit Silanen der allgemeinen Formel IV:

$$[(R^2)_o(R^3)_{3-o}Si]_mRZ \qquad \text{(IV)},$$

worin die Variable Z für eine isocyanatreaktive funktionelle Gruppe, vorzugsweise eine Hydroxylgruppe, eine Thiolgruppe oder eine primäre oder sekundäre Aminogruppe, insbesondere eine Hydroxylgruppe, steht und die Variablen R, $R^2$ und $R^3$ die vorstehend angegebene Bedeutung haben; oder

(2) die Umsetzung von Verbindungen der allgemeinen Formel V:

$$(Ac)_n R\text{-}Z \qquad (V),$$

worin der Index n und die Variablen Ac, R und Z die vorstehend angegebene Bedeutung haben; mit Silanen der allgemeinen Formel VI:

$$[(R^2)_o(R^3)_{3\text{-}o}Si]_m R\text{-}NCO \qquad (VI),$$

worin der Index m und die Variablen R, $R^2$ und $R^3$ die vorstehend angegebene Bedeutung haben.

Beispiele geeigneter Silane der allgemeinen Formel IV sind beispielsweise aus dem amerikanischen Patent US 5,998,504 A1, Spalte 3, Zeile 37, bis Spalte 4, Zeile 29 oder der europäischen Patentanmeldung EP 1 193 278 A1, Seite 3, Zeile 27 bis 43, bekannt.
Beispiele geeigneter Polyisocyanate sind

- Diisocyanate wie Isophorondüsocyanat (= 5-Isocyanato-1-isocyanatomethyl-1,3,3-trimethyl-cyclohexan), 5-Isocyanato-1-(2-isocyanatoeth-1-yl)-1,3,3-trimethyl-cyclohexan, 5-Isocyanato-1-(3-isocyanätoprop-1-yl)-1,3,3-trimethyl-cyclohexan, 5-Isocyanato-(4-isocyanatobut-1-yl)-1,3,3-trimethyl-cyclohexan, 1-Isocyanato-2-(3-isocyanatoprop-1-yl)-cyclohexan, 1-Isocyanato-2-(3-isocyanatoeth-1-yl)cyclohexan, 1-Isocyanato-2-(4-isocyanatobut-1-yl)-cyclohexan, 1,2-Diisocyanatocyclobutan, 1,3-Diisocyanatocyclobutan, 1,2-Diisocyanatocyclopentan, 1,3-Diisocyanatocyclopentan, 1,2-Düsocyanatocyclohexan, 1,3-Diisocyanatocyclohexan, 1,4-Düsocyanatocyclohexan, Dicyclohexylmethan-2,4'-diisocyanat, Trimethylendüsocyanat, Tetramethylendiisocyanat, Pentamethylendiisocyanat, Hexamenthylendiisocyanat (HDI), Ethylethylendiisocyxanat, Trimethylhexan-diisocyanat, Heptamethylendiisocyanat oder Diisocyanate, abgeleitet von Dimerfettsäuren, wie sie unter der Handelsbezeichnung DDI 1410 von der Firma Henkel vertrieben und in den Patentschriften WO 97/49745 und WO 97/49747 beschrieben werden, insbesondere 2-Heptyl-3,4-bis(9-isocyanatononyl)-1-pentyl-cyclohexan oder 1,2-, - 1,4- oder 1,3-Bis(isocyanatomethyl)cyclohexan, 1,2-, 1,4- oder 1,3-Bis(2-isocyanatoeth-1-yl)cyclohexan, 1,3-Bis(3-isocyanatoprop-1-yl)cyclohexan, 1,2-, 1,4- oder 1,3-Bis(4-isocyanatobut-1-yl)cyclohexan oder flüssiges Bis(4-isocyanatocyclohexyl)methan eines trans/trans-Gehalts von bis zum 30 Gew.-%, vorzugsweise 25 Gew.-% und insbesondere 20 Gew.-%, wie es in den Patentanmeldungen DE 44 14 032 A1, GB 1 220 717 A1, DE 16 18 795 A1 oder DE 17 93 785 A1 beschrieben wird, bevorzugt Isophorondiisocyanat, 5-Isocyanato-1-(2-isocyanatoeth-1-yl)-1,3,3-trimethyl-cyclohexan, 5-Isocyanato-1-(3-isocyanatoprop-1-yl)-1,3,3-trimethyl-cyclohexan, 5-Isocyanato-(4-isocyanatobut-1-yl)-1,3,3-trimethyl-cyclohexan, 1-Isocyanato-2-(3-isocyanatoprop-1-yl)-cyclohexan, 1-Isocyanato-2-(3-isocyanatoeth-1-yl)cyclohexan, 1-Isocyanato-2-(4-isocyanatobut-1-yl)-cyclohexan oder HDI, insbesondere HDI; oder

- Isocyanurat-, Biuret-, Allophanat-, Iminooxadiazindion-, Urethan-, Harnstoff-Carbodiimid und/oder Uretdiongruppen aufweisende Polyidocyanate, die in üblicher und bekannter Weise aus den vorstehend beschriebenen Diisocyanaten hergestellt werden; Beispiele geeigneter Herstellungsverfahren und Polyisocyanate sind beispielsweise aus den Patentschriften CA 2,163,591 A, US 4,419, 513 A, US 4,454,317 A, EP 0 646 608 A, US 4,801,675 A, EP 0 183 976 A1, DE 40 15 155 A1, EP 0 303 150 A1, EP 0 496 208 A1, EP 0 524 500 A1, EP 0 566 037 A1, US 5,258,482 A, US 5,290,902 A, EP 0 649 806 A1, DE 42 29 183 A1 oder EP 0 531 820 A1 bekannt.

Weitere Beispiele geeigneter Polyisocyanate sind aus dem amerikanischen Patent US 5,998,504 A, Spalte 5, Zeile 21, bis Spalte 6, Zeile 2, bekannt.
Besonders bevorzugt werden Isocyanurate auf der Basis von Isophorondiisocyanat zur Herstellung die Silane (A) verwendet.
Beispiele geeigneter Verbindungen der allgemeinen Formel V sind Glycidol und übliche und bekannte, hydoxylgruppenhaltige, olefinisch ungesättigte Monomere, wie

- Hydroxyalkylester von alpha,beta-olefinisch ungesättigten Carbonsäuren, wie Hydroxyalkylester der Acrylsäure, Methacrylsäure und Ethacrylsäure, in denen die Hydroxyalkylgruppe bis zu 20 Kohlenstoffatome enthält, wie 2-Hydroxyethyl-, 2-Hydroxypropyl, 3-Hydroxypropyl-, 3-Hydroxybutyl-, 4-Hydroxybutylacrylat, -methacrylat oder-ethycrylat; 1,4-Bis(hydoxymethyl)cyclohexan-, Octahydro-4,7-methano-1H-indendimethanol- oder Methylpropandiolmonoacrylat, - monoethacrylat, -monoethacrylat oder - monocrotonat; oder Umsetzungsproduke aus cyclischen Estern, wie zum Beispiel epsilon-Caprolacton und diesen Hydroxylalkylestern;

- olefinisch ungesättigte Alkohole wie Allylalkohol;

- Allylether von Polyolen wie Trimethylolpropanmonoallylether oder Pentaerythrimono-, di- oder -triallylether. Die höherfunktionellen Monomeren (1) werden im allgemeinen nur in untergeordneten Mengen verwendet. Im Rahmen der vorliegenden Erfindung sind hierbei unter untergeordneten Mengen an höherfunktionellen Monomeren solche Mengen zu verstehen, welche nicht zur Vernetzung oder Gelierung der Copolymerisate (A) führen, es sei denn, sie sollen in der Form von vernetzten Mikrogelteilchen vorliegen;

- Umsetzungsprodukte von alpha,beta-olefinisch Carbonsäuren mit Glycidylestern einer in alpha-Stellung verzweigten Monocarbonsäure mit 5 bis 18 Kohlenstoffatomen im Molekül. Die Umsetzung der Acryl- oder Methacrylsäure mit dem Glycidester einer Carbonsäure mit einem tertiären alpha-Kohlenstoffatom kann vorher, während oder nach der Polymerisationsreaktion erfolgen. Bevorzugt wird als Komponente (a1) das Umsetzungsprodukt von Acryl- und/oder Methacrylsäure mit dem Glycidylester der Versatic®-Säure eingesetzt. Dieser Glycidylester ist unter dem Namen Cardura® E10 im Handel erhältlich. Ergänzend wird auf Römpp Lexikon Lacke und Druckfarben, Georg Thieme Verlag, Stuttgart, New York, 1998, Seiten 605 und 606, verwiesen;

- Formaldehydaddukte von Aminoalkylestern von alpha,beta-olefinisch ungesättigten Carbonsäuren und von alpha, beta-ungesättigten Carbonsäureamiden, wie N-Methylolaminoethylacrylat, - aminoethylmethacrylat, -acrylamid und -methacrylamid; sowie

- Acryloxysilangruppen und Hydroxylgruppen enthaltende olefinisch ungesättigte Monomere, herstellbar durch Umsetzung hydroxyfunktioneller Silane mit Epichlorhydrin und anschließender Umsetzung des Zwischenprodukts mit einer alpha,beta-olefinisch ungesättigten Carbonsäure, insbesondere Acrylsäure und Methacrylsäure, oder ihren Hydroxyalkylestern.

Beispiele geeigneter Silane der allgemeinen Formel VI sind beispielsweise aus der deutschen Patentanmeldung DE 199 10 876 A1 bekannt.

Bevorzugt wird das Modifizierungsmittel (B) aus der Gruppe, bestehend aus hydroxylgruppenhaltigen Verbin-dungen allgemeinen Formel VII:

$$R^2\text{-OH} \qquad (VII),$$

worin die Variable $R^2$ die vorstehend angegebene Bedeutung hat, ausgewählt. Besonders bevorzugt werden aliphatische, insbesondere primäre, Alkohole, wie sie beispielsweise, in dem amerikanischen Patent US 4,652,470 A1, Spalte 9, Zeile 59, bis Spalte 10, Zeile 5, beschrieben werden, verwendet. Ganz besonders bevorzugt wird n-Hexanol verwendet.

Bevorzugt wird das Modifizierungsmittel (C) aus der Gruppe, bestehend aus Silanen der allgemeinen Formel VIII:

$$(R^2)_{4-p}Si(R^3)_p \qquad (VIII),$$

worin der Index p = 1, 2 oder 3, insbesondere 1, und die Variablen $R^2$ und $R^3$ die vorstehend angegebene Bedeutung haben, ausgewählt.

Beispiele geeigneter Silane (C) werden in dem amerikanischen Patent US 5,998,504 A, Zeile 30, bis Spalte 5, Zeile 20, beschrieben. Besonders bevorzugt wird Trimethylethoxysilan verwendet.

Als zu modifizierende Nanopartikel können alle üblichen und bekannten Nanopartikel ausgewählt werden. Vorzugsweise werden sie aus der Gruppe, bestehend aus Metallen, Verbindungen von Metallen und organischen Verbindungen, ausgewählt.

Vorzugsweise werden die Metalle aus der dritten bis fünften Hauptgruppe, der dritten bis sechsten sowie der ersten und zweiten Nebengruppe des Periodensystems der Elemente sowie den Lanthaniden, und bevorzugt aus der Gruppe, bestehend aus Bor, Aluminium, Gallium, Silizium, Germanium, Zinn, Arsen, Antimon, Silber, Zink, Titan, Zirkonium, Hafnium, Vanadium, Niob, Tantal, Molybdän, Wolfram und Cer, ausgewählt. Insbesondere werden Aluminium und Silizium verwendet.

Vorzugsweise handelt es sich bei den Verbindungen der Metalle um Oxide, Oxidhydrate, Sulfate, Hydroxide oder Phosphate, insbesondere Oxide, Oxidhydrate und Hydroxide.

Beispiele geeigneter organischer Verbindungen sind Lignine und Stärken.

Vorzugsweise weisen die zu modifizierenden Nanopartikel eine Primärpartikelgröße <50, bevorzugt 5 bis 50, insbesondere 10 bis 30 nm auf.

An und für sich können die erfindungsgemäßen Nanopartikel hergestellt werden, indem man bei dem erfindungsgemäßen Herstellverfahren die zu modifizierenden Nanopartikel in beliebiger Reihenfolge mit den vorstehend beschriebenen Modifizierungsmitteln umsetzt. Vorzugsweise werden sie aber in einer ersten Verfahrensstufe mit mindestens einem, insbesondere einem, Modifizierungsmittel (A) sowie in einer zweiten Verfahrensstufen mit mindestens einem, insbesondere einem, Modifizierungsmittel (B) und in einer dritten Verfahrensstufe mit mindestens einem, insbesondere einem, Modifizierungsmittel (C) umgesetzt. Alternativ werden sie in einer zweiten Verfahrensstufe mit einem, insbesondere einem, Modifizierungsmittel (C) und in einer dritten Verfahrensstufen mit einem, insbesondere einem, Modifizierungsmittel (B) umgesetzt. In noch einer weiteren Alternative werden sie in einer zweiten Verfahrensstufe mit mindestens einem, insbesondere einem, der Modifizierungsmittel (B) und (C) umgesetzt.

In einer weiteren Variante des erfindungsgemäßen Herstellverfahrens werden mindestens ein, insbesondere ein, Modifizierungsmittel (A) der allgemeinen Formel II und mindestens ein, insbesondere ein, Modifizierungsmittel (C) der allgemeinen Formel VIII gemäß dem Sol-Gel-Prozess miteinander hydrolysiert und kondensiert, wonach man die resultierenden Polykondensate mit mindestens einem, insbesondere einem, Modifizierungsmittel (B) umsetzt, wodurch die erfindungsgemäßen Nanopartikel resultieren (vgl. Römpp Online, Georg Thieme Verlag, Stuttgart, 2002, »Sol-Gel-Prozess«).

Bevorzugt werden bei der Umsetzung der Silane (A) und (C) mit oder zu den zu modifizierenden Nanopartikeln übliche und bekannte Katalysatoren für die Hydrolyse, wie organische und anorganische Säuren, verwendet.

An und für sich können die Modifizierungsmittel (A), (B) und (C) in beliebigen Mengenverhältnissen mit oder zu den zu modifizierenden Nanopartikel umgesetzt werden. Es empfiehlt sich aber die Modifizierungsmittel (A), (B) und (C) in Mengen zu verwenden, dass die vorstehend beschriebenen Gewichtsverhältnisse der modifizierenden Gruppen (A), (B) und (C) resultieren.

Die erfindungsgemäßen Nanopartikel können als solche bereits allen Verwendungszwecken zugeführt werden, wie sie in der internationalen Patentanmeldung WO 99/52964 Seite 12, Zeile 10 bis Seite 14, Zeile 4, beschrieben werden; vor allem aber eignen sich die erfindungsgemäßen Nanopartikel für die Herstellung von Dispersionen in aprotischen, insbesondere aprotisch unpolaren, Lösemitteln und/oder Reaktivverdünnern.

Als aprotische Lösemittel werden organische Lösemittel verstanden, die keine protolysefähigen Wasserstoffatome enthalten, also keine Protonendonotoren darstellen. Ergänzend wird hierzu auf Römpp Lexikon Lacke und Druckfarben, Georg Thieme Verlag, Stuttgart, New York 1998, Seite 41, »Aprotische Lösemittel«, oder Römpp Online, Georg Thieme Verlag, Stuttgart, New York, 2002, »Aprotische Lösemittel«, verwiesen.

Unter Reaktivverdünner werden reaktive Verdünnungsmittel oder reaktive Lösemittel verstanden, wobei es sich um einen vereinfachten Begriff für die längere Bezeichnung nach DIN 55945: 1996-09 handelt, die Verdünnungsmittel beschreibt, die bei der Filmbildung durch chemische Reaktion Bestandteil des Bindemittels werden. Hierbei handelt es sich insbesondere um olefinisch ungesättigte Monomere mit mindestens einer Doppelbindung, insbesondere mindestens zwei Doppelbindungen. Ergänzend wird hierzu auf Römpp Lexikon Lacke und Druckfarben, Georg Thieme Verlag, Stuttgart, New York, 1998, Seite 491, »Reaktivverdünner« verwiesen.

Besonders bevorzugt haben die aprotischen Lösemittel und/oder Reaktivverdünner bezüglich der modifizierenden Gruppen (A) und (B) einen Flory-Huggins-Parameter $\chi > 0,5$ (vgl. hierzu K. Kehr, Mittlere Feldtheorie von Polymerlösungen, Schmelzen und Mischungen; Random Phase Approximation, in Physik der Polymere, 22. IFF-Ferienkurs, Forschungszentrum Jülich GmbH, Jülich, 1991)

Überraschenderweise weisen die erfindungsgemäßen Dispersionen bezogen auf ihre Gesamtmenge ein Festkörpergehalt > 30, bevorzugt > 40 und insbesondere > 50 Gew.-% auf, ohne dass es zu einer Sedimentation oder Gelbildung kommt. So weisen beispielsweise die erfindungsgemäßen Dispersionen, die erfindungsgemäße Nanopartikel auf der Basis von Siliziumdioxid enthalten Festkörpergehalte zwischen 25 und 70% auf, wobei der Anteil an reinem Siliziumdioxid, der durch den Glührückstand gegeben ist, vorzugsweise zwischen 1 und 40 Gew.-%, insbesondere zwischen 20 und 30 Gew.-%, liegt. Die erfindungsgemäßen Dispersionen zeigen auch nach der Zugabe von Polyisocyanaten, wie beispielsweise einer 90%igen Anlösung von Hexamethylendiisocyanat in Solvent Naphta / Butylacetat, keinerlei Tendenz zur Gelbildung.

Der Transfer der erfindungsgemäßen Nanopartikel in die aprotischen, insbesondere in die aprotisch unpolaren, Lösemittel oder Reaktiwerdünner gelingt durch eine Destillation. Zur Verfahrensoptimierung können daher bestimmte Schlepper, die mit den eingesetzten protischen Lösemitteln niedrigsiedende Azeotrope bilden, eingesetzt werden. Das Verfahren nach der Erfindung ermöglicht die Herstellung von erfindungsgemäßen Dispersionen mit einem Restgehalt an protischen Lösemitteln von weniger als 1 Gew.-% (gemäß GC-Analyse).

Die erfindungsgemäßen Dispersionen können mindestens einen Zusatzstoff enthalten. Vorzugsweise wird der Zusatzstoff aus der Gruppe, bestehend aus üblichen und bekannten polymeren und oligomeren Bindemitteln, Vernetzungsmitteln, farb- und/oder effektgebenden Pigmenten, organischen und anorganischen, transparenten oder opaken Füllstoffen, sonstigen von den erfindungsgemäßen Nanopartikeln verschiedenen Nanopartikeln, UV-Absorbern, Lichtschutzmitteln, Radikalfängern, Entlüftungsmitteln, Slipadditiven, Polymerisationsinhibitoren, Photoinitiatoren, Initiatoren der radikalischen oder kationischen Polymerisation, Entschäumem, Emulgatoren, Netz- und Dipergiermitteln, Haftvermittlern, Verlaufmitteln, filmbildenden Hilfsmitteln, Sag control agents (SCA), rheolögiesteuernden Additiven (Verdicker), Flammschutzmitteln, Sikkativen, Trockungsmittein, Hautverhinderungsmitteln, Korrosionsinhibitoren, Wachsen und Maftierungsmittein; ausgewählt. Insbesondere werden Lackadditive als Zusatzstoffe eingesetzt (vgl. auch das Lehrbuch von Johan Bieleman, »Lackadditive« Wiley-VCH, Weinheim, New York, 1998, oder Römpp Online, Georg Thieme Verlag, Stuttgart, New York, 2002, »Additive«).

Die Auswahl des Zusatzstoffs richtet sich insbesondere nach dem für die erfindungsgemäße Dispersion vorgesehenen Verwendungszweck. Wesentlich ist dabei, dass der Zusatzstoff die Stabilität der erfindungsgemäßen Dispersion nicht beeinträchtigen darf.

Die Herstellung der erfindungsgemäßen Dispersion erfordert keine methodischen Besonderheiten, sondern erfolgt nach den üblichen und bekannten Methoden der Herstellung von Dispersionen durch Vermischen der vorstehend beschriebenen Bestandteile in geeigneten Mischaggregaten wie Rührkessel, Dissolver, Inline-Dissolver, Rührwerksmühlen oder Extruder.

Die erfindungsgemäßen Nanopartikeln und die erfindungsgemäßen Dispersionen sind außerordentlich breit anwendbar und übertreffen hierin die modifizierten Nanopartikel des Standes der Technik. Insbesondere können sie der Herstellung von Beschichtungsstoffen, Klebstoffen, Dichtungsmassen, Compounds auf der Basis technischer Kunststoffe und härtbaren Massen dienen.

Dabei dienen die Beschichtungsstoffe der Herstellung von Beschichtungen und Lackierungen, die Klebstoffe der Herstellung von Klebschichten, die Dichtungsmassen der Herstellung von Dichtungen und die Compounds auf der Basis technischer Kunststoffe und die härtbaren Massen der Herstellung von Formteilen, insbesondere optischen Formteilen, freitragenden Folien und Hartschäumen.

Sie eignen sich insbesondere hervorragend für den Schutz von Oberflächen von Substraten jeglicher Art vor der Beschädigung durch mechanische Einwirkung, insbesondere dem Schutz vor Kratzern, und/oder zu ihrer Dekoration. Bei den Substraten handelt es sich vor allem um Kraftfahrzeuge oder Teile hiervon, Bauwerke, Möbel, Fenster und Türen, industrielle Kleinteile, Coils, Container, Emballagen, weiße Ware, Folien, optische Bauteile, elektrotechnische Bauteile, mechanische Bauteile sowie Glashohlkörper. Weitere Beispiele für Verwendungszwecke und Substrate sind aus der deutschen Patentanmeldung DE 198 16 136 A 1, Spalte 7, Zeile 54, bis Spalte 8, Zeile 58, oder der internationalen Patentanmeldung WO 99/52964 Seite 12, Zeile 10 bis Seite 14, Zeile 4, bekannt.

Überraschenderweise können die erfindungsgemäßen Beschichtungsstoffe als Zwei- oder Mehrkomponentensysteme bereitgestellt werden. Die erfindungsgemäßen Zwei- und Mehrkomponentensysteme, insbesondere auf der Basis von Polyisocyanaten, haben eine besonders lange Topfzeit oder Verarbeitungszeit. Dabei können sie thermisch und mit aktinischer Strahlung (Dual-Cure) gehärtet werden.

Besonders bevorzugt werden die erfindungsgemäßen Beschichtungsstoffe für die Herstellung hochkratzfester Klarlackierungen im Rahmen der Automobilserienlackierung (OEM) mit farb- und/oder effektgebenden Mehrschichtlakkierungen verwendet. Bekanntermaßen werden diese besonders hochwertigen Mehrschichtlackierungen nach so genannten Nass-in-nass-Verfahren hergestellt, wie sie beispielsweise aus der deutschen Patentanmeldung DE 199 30 665 A1, Seite 15 , Zeilen 15, bis Seite 16, Zeile 24, bekannt sind.

Für die Herstellung der erfindungsgemäßen Beschichtungen und Lackierungen werden die erfindungsgemäßen Beschichtungsstoffe mit Hilfe der für den jeweiligen Verwendungszweck üblichen und bekannten geeigneten Verfahren appliziert, wie z.B. Spritzen, Rakeln, Streichen, Gießen, Tauchen, Tränken, Träufeln oder Walzen erfolgen. Dabei kann das zu beschichtende Substrat als solches ruhen, wobei die Applikationseinrichtung oder -anlage bewegt wird. Indes kann auch das zu beschichtende Substrat, insbesondere ein Coil, bewegt werden, wobei die Applikationsanlage relativ zum Substrat ruht oder in geeigneter Weise bewegt wird.

Für die Herstellung der erfindungsgemäßen Formteile werden die erfindungsgemäßen Dispersionen in geeignete Hohlformen gegossen und darin ausgehärtet, wonach sie von den Hohlformen getrennt werden. Die erfindungsgemäßen Compounds auf der Basis technischer Kunststoffe werden vorzugsweise extrudiert und anschließend in geeigneten Hohlformen spritzgegossen.

Für die Herstellung der erfindungsgemäßen Folien werden die üblichen und bekannten Methoden wie Gießen oder Folienblasen angewandt.

Für die Herstellung der erfindungsgemäßen Hartschäume werden die auf dem Gebiet der Schaumkunststoffe üblichen und bekannten Verfahren angewandt (vgl. Römpp Online, Georg Thieme Verlag, Stuttgart, New York, 2002, »Schaumkunststoffe«).

Die thermische Härtung der erfindungsgemäßen Beschichtungsstoffe, Klebstoffe, Dichtungsmassen und härtbaren Massen kann nach einer gewissen Ruhezeit erfolgen. Sie kann eine Dauer von 30 Sekunden bis 2 Stunden, vorzugsweise 1 Minute bis 1 Stunde und insbesondere 1 bis 45 Minuten haben. Die Ruhezeit dient beispielsweise zum Verlauf und zur Entgasung der Lackschichten oder zum Verdunsten von flüchtigen Bestandteilen. Die Ruhezeit kann durch die Anwendung erhöhter Temperaturen bis unterstützt und/oder verkürzt werden, sofern hierbei keine Schädigungen oder Veränderungen der erfindungsgemäßen Beschichtungsstoffe, Klebstoffe Dichtungsmassen und härtbaren Massen eintreten, wie etwa eine vorzeitige vollständige Vernetzung.

Die thermische Härtung weist keine methodischen Besonderheiten auf, sondern erfolgt nach den üblichen und bekannten Methoden wie Erhitzen in einem Umluftofen oder Bestrahlen mit IR-Lampen. Hierbei kann die thermische Härtung auch stufenweise erfolgen. Eine weitere bevorzugte Härtungsmethode ist die Härtung mit nahem Infrarot (NIR-Strahlung). Geeignete Verfahren dieser Art werden beispielsweise von Roger Talbert in Industrial Paint & Powder, 04/01, Seiten 30 bis 33, »Curing in Seconds with NIR«, oder in Galvanotechnik, Band 90 (11), Seiten 3098 bis 3100, »Lackiertechnik, NIR-Trocknung im Sekundentakt von Flüssig- und Pulverlacken« , beschrieben.

Vorteilhafterweise erfolgt die thermische Härtung bei einer Temperatur von 50 bis 200, besonders bevorzugt 60 bis 180 und insbesondere 80 bis 160 °C während einer Zeit von 1 Minute bis zu 2 Stunden, besonders bevorzugt 2 Minuten bis zu 1 Stunde und insbesondere 3 bis 30 Minuten.

Die Härtung mit aktinischer Strahlung wird vorzugsweise mit UV-Strahlung und/oder Elektronenstrahlung durchgeführt. Vorzugsweise wird hierbei eine Dosis von 1.000 bis 3.000, bevorzugt 1.100 bis 2.900, besonders bevorzugt 1.200 bis 2.800, ganz besonders bevorzugt 1.300 bis 2.700 und insbesondere 1.400 bis 2.600 mJ/cm$^2$ angewandt. Vorzugsweise liegt die Strahlenintensität bei $1 \times 10°$ bis $3 \times 10^5$, bevorzugt $2 \times 10°$ bis $2 \times 10^5$, besonders bevorzugt $3 \times 10°$ bis $1,5 \times 10^5$ und insbesondere $5 \times 10°$ bis $1,2 \times 10^5$ Wm$^{-2}$.

Gegebenenfalls kann die Härtung mit aktinischer Strahlung von anderen Strahlenquellen ergänzt werden. Im Falle von Elektronenstrahlen wird vorzugsweise unter Inertgasatmosphäre gearbeitet. Dies kann beispielsweise durch Zuführen von Kohlendioxid und/oder Stickstoff direkt an die Oberfläche der Lackschichten gewährleistet werden. Auch im Falle der Härtung mit UV-Strahlung kann, um die Bildung von Ozon zu vermeiden, unter Inertgas oder einer sauerstoffabgereicherten Atmosphäre gearbeitet werden.

Für die Härtung mit aktinischer Strahlung werden die üblichen und bekannten Strahlenquellen und optischen Hilfsmaßnahmen angewandt. Beispiele geeigneter Strahlenquellen sind Blitzlampen der Firma VISIT, Quecksilberhoch- oder -niederdruckdampflampen, welche gegebenenfalls mit Blei dotiert sind, um ein Strahlenfenster bis zu 405 nm zu öffnen, oder Elektronenstrahlquellen. Die Anlagen und Bedingungen dieser Härtungsmethoden werden beispielsweise in R. Holmes, U.V. and E.B. Curing Formulations for Printing Inks, Coatings and Paints, SITA Technology, Academic Press, London, United Kindom 1984, beschrieben. Weitere Beispiele geeigneter Verfahren und Vorrichtungen zur Härtung mit aktinischer Strahlung werden in der deutschen Patentanmeldung DE 198 18 735 A1, Spalte 10, Zeilen 31 bis 61, von R. Stephen Davidson, in »Exploring the Science, Technology and Applications of U.V. and E.B. Curing«, Sita Technology Ltd., London, 1999, oder von Dipl.-Ing. Peter Klamann, in »eltosch System-Kompetenz, UV-Technik, Leitfaden für Anwender«, Oktober 1998, beschrieben.

Bei kompliziert geformten Werkstücken, wie sie für Automobilkarosserien vorgesehen sind, können die nicht direkter Strahlung zugänglichen Bereiche (Schattenbereiche), wie Hohlräume, Falzen und andere konstruktionsbedingte Hinterschneidungen, mit Punkt-, Kleinflächen- oder Rundumstrahlern, verbunden mit einer automatischen Bewegungseinrichtung für das Bestrahlen von Hohlräumen oder Kanten, (partiell) ausgehärtet werden.

Hierbei kann die Aushärtung stufenweise erfolgen, d. h. durch mehrfache Belichtung oder Bestrahlung mit aktinischer Strahlung. Dies kann auch alternierend erfolgen, d. h., dass abwechselnd mit UV-Strahlung und Elektronenstrahlung gehärtet wird.

Werden die thermische Härtung und Härtung mit aktinischer Strahlung zusammen angewandt, können diese Methoden gleichzeitig oder alternierend eingesetzt werden. Werden die beiden Härtungsmethoden alternierend verwendet, kann beispielsweise mit der thermischen Härtung begonnen und mit der Härtung mit aktinischer Strahlung geendet werden. In anderen Fällen kann es sich als vorteilhaft erweisen, mit der Härtung mit aktinischer Strahlung zu beginnen und hiermit zu enden.

Die erfindungsgemäßen Beschichtungen, Lackierungen, Klebschichten, Dichtungen, Formteile, frei tragenden Folien und Hartschäume haben hervorragende anwendungstechnische Eigenschaften. Vor allem sind ihre hohe Transparenz und Klarheit sowie ihre besonders hohe Kratzfestigkeit hervorzuheben.

Die erfindungsgemäßen Beschichtungen und Lackierungen weisen ein hervorragendes Eigenschaftsprofil auf, das hinsichtlich der Mechanik, Optik, Korrosionsbeständigkeit und Haftung sehr gut ausgewogen ist. So weisen die erfindungsgemäßen Mehrschichtlackierungen die vom Markt geforderte hohe optische Qualität und Zwischenschichthaftung auf und werfen keine Probleme wie mangelnde Schwitzwasserbeständigkeit, Rissbildung (mudcracking) oder Verlaufsstörungen oder Oberflächenstrukturen in den erfindungsgemäßen Klarlackierungen auf. Insbesondere weisen die erfindungsgemäßen Mehrschichtlackierungen einen hervorragenden Metallic-Effekt, einen hervorragenden D.O.I. (distinctiveness of the reflected image) und eine hervorragende Oberflächenglätte auf.

Demzufolge weisen Substrate, die beispielsweise mit mindestens einer erfindungsgemäßen Beschichtung, Lackierung oder frei tragenden Folie beschichtet, einer erfindungsgemäßen Klebschicht verklebt und/oder einer erfindungsgemäßen Dichtung abgedichtet sind, bei einem besonders vorteilhaften anwendungstechnischen Eigenschaftsprofil eine besonders lange Gebrauchsdauer auf, was sie wirtschaftlich, ästhetisch und technisch besonders wertvoll macht.

**Beispiele**

**Herstellbeispiel 1**

**Die Herstellung des Modifizierungsmittels (A 1)**

80,2 g eines teilblockierten und zu ca. 40 % teilsilanisierten Isophorondiisocyanat-Trimeren gemäß Herstellbeispiel 1 der europäischen Patentanmeldung EP 1 193 278 A1 wurden mit 13,97 g 3,5 Dimethylpyrazol in einem Dreihalskolben mit Rückflußkühler und Thermometer zusammengegeben und auf 50 °C erhitzt, wobei gerührt wurde. Der Umsatz der Reaktion wurde mit Hilfe der IR - Spektroskopie verfolgt. Nach 13 Stunden war die Blockierungsreaktion vollständig abgeschlossen: es konnten keine freien Isocyanatgruppen mittels IR - Spektroskopie mehr nachgewiesen werden.

**Herstellbeispiel 2**

**Die Herstellung des Modifizierungsmittels (A 2)**

40, 6 g eines teilblockierten und zu ca. 40 % teilsilanisierten Isophorondiisocyanat-Trimeren gemäß Herstellbeispiel 1 der europäischen Patentanmeldung EP 1 193 278 A1 wurden mit 9 g 2-Hydroxyethylmethacrylat in einem Dreihalskolben mit Rückflußkühler und Thermometer zusammengegeben und auf 90 °C erhitzt, wobei gerührt wurde. Der Umsatz der Reaktion wurde mit Hilfe der IR - Spektroskopie verfolgt. Nach 36 Stunden war die Blockierungsreaktion vollständig abgeschlossen: es konnten keine freien Isocyanatgruppen mittels IR - Spektroskopie mehr nachgewiesen werden.

**Herstellbeispiel 3**

**Die Herstellung des Modifizierungsmittels (A 3)**

50, 2 g eines teilblockierten und zu ca. 40 % teilsilanisierten Isophorondiisocyanat-Trimeren gemäß Herstellbeispiel 1 der europäischen Patentanmeldung EP 1 193 278 wurden mit 9,8 g 2- Hydroxyethylacrylat in einem Dreihalskolben mit Rückflußkühler und Thermometer zusammengegeben und auf 90 °C erhitzt, wobei gerührt wurde. Der Umsatz der Reaktion wird mit Hilfe der IR - Spektroskopie verfolgt. Nach 30 Stunden war die Blockierungsreaktion vollständig abgeschlossen: es konnten keine freien Isocyanatgruppen mittels IR - Spektroskopie mehr nachgewiesen werden.

**Beispiel 1**

**Die Herstellung modifizierter Nanopartikel und ihrer Dispersion in einem aprotischen Lösemittel**

11,1 Gewichtsteile des Modifizierungsmittels A 1 gemäß Herstellbeispiel 1 wurden auf 70°C erwärmt und langsam mit 19,9 Gewichtsteile einer kolloidalen Lösung von $SiO_2$ in Isopropanol (IPA - ST - S, erhältlich bei der Fa. Nissan Chemical) sowie einem Gewichtsteil 0,1 N Essigsäure versetzt. Das so erhaltene Gemisch wurde noch 2 Stunden bei 70°C gerührt und anschließend langsam, durch Zutropfen über einen Zeitraum von mindestens 30 Minuten mit 0,7 Gewichtsteilen Trimethylethoxysilan versetzt. Darauf wurden 10,3 Gewichtsteile Solvent Naphta und 1,6 Gewichtsteile Hexanol zugegeben, und die erhaltene Lösung wurde weitere 2 Stunden bei 70°C gerührt. Um niedrig siedende Bestandteile abzutrennen wurde das abgekühlte Reaktionsgemisch am Rotationsverdampfer bei einer Badtemperatur von nicht mehr als 55°C i. Vak. von den niedrig siedenden Bestandteilen getrennt.

Die so erhaltene Dispersion der modifizierter Nanopartikel wies einen Gehalt von protischen Lösemitteln (Isopropanol, Hexanol) von weniger als 1 Gew.-% auf. Der Festkörpergehalt betrug 53 %. Der Gehalt an blockierten Isocyanatgruppen betrug 2,26 Gew.-%. Die Dispersion war stabil bei 40 °C über einen Zeitraum von mindestens 30 Tagen, ohne dass ein Viskositätsanstieg zu beobachten war. Die Reaktivität der Dispersion gegenüber freien Isocyanaten war äußerst gering. Eine Mischung von 9 Gewichtsteilen Basonat ® HI 190, einem Polyisocyanat der Firma BASF Aktiengesellschaft, 0,5 Gewichtsteilen Butylacetat, 0,5 Gewichtsteilen Solvent Naphta und 10 Gewichtsteilen der erfindungsgemäßen Dispersion der modifizierten Nanopartikel war auch nach 6 Tagen bei Raumtemperatur stabil und zeigte keinerlei Vergelung.

**Beispiele 2 und 3**

**Die Herstellung modifizierter Nanopartikel und ihrer Dispersion in aprotischen Lösemitteln**

Es wurde wie bei Beispiel 1 verfahren, mit dem Unterschied, dass statt der kolloidalen Lösung von $SiO_2$ IPA - ST - S, die kolloidale Lösung von $SiO_2$ IPA - ST (Beispiel 2) sowie die kolloidalen Lösung von $SiO_2$ MA - ST (Beispiel 2) eingesetzt wurden. Die resultierenden Dispersionen modifizierter Nanopartikel der Beispiele 2 und 3 zeigten die gleichen, wie in Beispiel 1 beschriebenen, hervorragenden Eigenschaften.

**Beispiel 3**

**Die Herstellung modifizierter Nanopartikel und ihrer Dispersion in aprotischen Lösemitteln**

Es wurde wie bei Beispiel 1 verfahren, mit dem Unterschied, dass statt des in Beispiel 1 eingesetzten Lösemittels Solvent Naphta, Diisobutylketon als Lösemittel verwendet wurde. Die resultierende Dispersion modifizierter Nanopartikel wies die gleichen, wie in Beispiel 1 beschriebenen, hervorragenden Eigenschaften auf.

**Beispiel 4:**

**Die Herstellung modifizierter Nanopartikel und ihrer Dispersion in einem Reaktivverdünner**

5,1 Gewichtsteile des Modifizierungsmittels A 2 gemäß Herstellbeispiel 2 wurde auf 70°C erwärmt und langsam mit 9,1 Gewichtsteilen einer kolloidalen Lösung von $SiO_2$ in Isopropanol (IPA - ST, erhältlich bei der Fa. Nissan Chemical) sowie 0,5 Gewichtsteilen 0,1 N Essigsäure versetzt. Das so erhaltene Gemisch wurde noch 3 Stunden bei 70°C gerührt und anschließend langsam durch Zutropfen über einen Zeitraum von mindestens 30 Minuten mit 0,3 Gewichtsteilen Trimethylethoxysilan versetzt. Darauf wurden 4,7 Gewichtsteile n-Butylmethacrylat (Reaktivverdünner) und 0,7 Gewichtsteile Hexanol zugegeben, und die erhaltene Lösung wurde weitere 3 Stunden bei 70°C gerührt. Um niedrig siedende Bestandteile abzutrennen, wurde das abgekühlte Reaktionsgemisch am Rotationsverdampfer bei einer Badtemperatur von nicht mehr als 55°C i. Vak. von den niedrig siedenden Bestandteilen getrennt.

Die so erhaltene Dispersion der modifizierten Nanopartikel wies einen Gehalt von protischen Lösemitteln (Isopropanol, Hexanol) von weniger als 1 Gew.-% auf. Der Festkörpergehalt betrug 57 Gew.-%. Der Gehalt an blockierten Isocyanatgruppen betrug 2,14 Gew.-%. Die erhaltene Dispersion war bei Raumtemperatur über einen Zeitraum von mindestens 8 Tagen stabil, ohne dass ein Viskositätsanstieg zu beobachten war.

Die Reaktivität der erhaltenen Dispersion gegenüber freien Isocyanaten war äußerst gering. Eine Mischung von 9 Gewichtsteilen Basonat ® HI 190 der Firma BASF Aktiengesellschaft, 0,5 Gewichtsteilen Butylacetat, 0,5 Gewichtsteilen Solvent Naphta und 10 Gewichtsteilen der erfindungsgemäßen Dispersion der Nanopartikel war auch nach 6 Tagen bei Raumtemperatur stabil und zeigte keinerlei Vergelung.

Die modifizierten Nanopartikel waren sehr gut geeignet zur Herstellung von Gelen auf Basis von (Meth)Acrylaten sowie als Ausgangspunkt zur Herstellung von hochverzweigten Polymerisaten, die trotz hohem Molekulargewicht eine vergleichsweise niedrige Viskosität aufwiesen.

**Beispiel 5**

**Die Herstellung modifizierter Nanopartikel und ihrer Dispersion in aprotischen Lösemitteln**

11,1 Gewichtsteile des Modifizierungsmittels A 3 gemäß Herstellbeispiel 3 wurden auf 70°C erwärmt und langsam mit 19,9 Gewichtsteilen einer kolloidalen Lösung von $SiO_2$ in Isopropanol (IPA - ST, erhältlich bei der Fa. Nissan Chemical) sowie 1 Gewichtsteil 0,1 N Essigsäure versetzt. Das so erhaltene Gemisch wurde noch 3 Stunden bei 70°C gerührt und anschließend langsam, durch Zutropfen über einen Zeitraum von mindestens 30 Minuten mit 0,7 Gewichtsteilen Trimethylethoxysilan versetzt. Darauf wurden 10,3 Gewichtsteile Solvent Naphta und 1,6 Gewichtsteile Hexanol zugegeben, und die erhaltene Lösung wurde weitere 3 Stunden bei 70°C gerührt. Um niedrig siedende Bestandteile abzutrennen, wurde das abgekühlte Reaktionsgemisch am Rotationsverdampfer bei einer Badtemperatur von nicht mehr als 55°C i. Vak. von den niedrig siedenden Bestandteilen getrennt.

Die so erhaltene Dispersion der modifizierten Nanopartikel wies einen Gehalt von protischen Lösemitteln (Isopropanol, Hexanol) von weniger als 1 Gew.-% auf. Der Festkörpergehalt betrug 50,4 Gew.-%. Der Gehalt an blockierten Isocyanatgruppen betrug 2,39 Gew.-%. Die erhaltene Dispersion war stabil bei Raumtemperatur über einen Zeitraum von mindestens 8 Tagen, ohne dass ein Viskositätsanstieg zu beobachten ist.

Die Reaktivität der erhaltenen Dispersion gegenüber freien Isocyanaten war äußerst gering. Eine Mischung von 9 Gewichtsteilen Basonat ® HI 190 der Firma BASF Aktiengesellschaft, 0,5 Gewichtsteilen Butylacetat, 0,5 Gewichtsteilen Solvent Naphta und 10 Gewichtsteilen der erfindungsgemäßen Dispersion der Nanopartikel war auch nach 6 Tagen bei Raumtemperatur stabil und zeigte keinerlei Vergelung.

Die Dispersion war hervorragend für die Herstellung von thermisch und mit aktinischer Strahlung härtbaren Klarlacken (Dual-Cure-Klarlacken) geeignet.

**Beispiel 6**

**Die Herstellung modifizierter Nanopartikel und ihrer Dispersion in aprotischen Lösemitteln**

11,1 Gewichtsteile des Modifizierungsmittels gemäß Herstellbeispiel 3 wurden auf 70°C erwärmt und langsam mit 19,9 Gewichtsteilen einer kolloidalen Lösung von $SiO_2$ in Isopropanol (IPA - ST, erhältlich bei der Fa. Nissan Chemical) sowie 1 Gewichtsteil 0,1 N Essigsäure versetzt. Das so erhaltene Gemisch wurde noch 3 Stunden bei 70°C gerührt und anschließend langsam, durch Zutropfen über einen Zeitraum von mindestens 30 Minuten mit 0,7 Gewichtsteilen Trimethylethoxysilan versetzt. Darauf wurden 10,3 Gewichtsteile Sartomer ® 399 (Reaktiwerdünner, erhältlich bei der Fa. Cray Valley) und 1,6 Gewichtsteile Hexanol zugegeben, und die erhaltene Lösung wurde weitere 3 Stunden bei 70°C gerührt. Um niedrig siedende Bestandteile abzutrennen, wurde das abgekühlte Reaktionsgemisch am Rotationsverdampfer bei einer Badtemperatur von nicht mehr als 60°C i. Vak. von den niedrig siedenden Bestandteilen getrennt.

Die so erhaltene Dispersion der modifizierten Nanopartikel wies einen Gehalt von $SiO_2$ von 22,4 Gew. % auf (bestimmt über die gravimetrische Bestimmung des Glührückstandes bei 800°C/30 Minuten).

Die Dispersion war hervorragend für die Herstellung von mit UV-Strahlung härtbaren Beschichtungsstoffen eines besonders hohen Festkörpergehalts (100%-Systeme) geeignet.

**Beispiel 7**

**Die Herstellung modifizierter Nanopartikel und ihrer Dispersion in aprotischen Lösemitteln**

11,1 Gewichtsteile des Modifizierungsmittels (A 1) gemäß Herstellbeispiel 1 wurden auf 70°C erwärmt und mit 19,9 g Gewichtsteilen einer kolloidalen Lösung von $SiO_2$ in Isopropanol sowie einem Gewichtsteil 0,1 N Essigsäure versetzt. Das so erhaltene Gemisch wurde noch 3 Stunden bei 70°C gerührt und anschließend langsam, durch Zutropfen über einen Zeitraum von mindestens 30 Minuten mit 0,7 Gewichtsteilen Trimethylethoxysilan versetzt. Die erhaltene Lösung wurde weitere 3 Stunden bei 70°C gerührt. Darauf wurden 10, 3 Gewichtsteile Solvent Naphta und 1,6 Gewichtsteile Hexanol zugegeben. Um niedrig siedende Bestandteile abzutrennen, wurde das abgekühlte Reaktionsgemisch am Rotationsverdampfer bei einer Badtemperatur von nicht mehr als 55°C. i. Vak. von den niedrig siedenden Bestandteilen getrennt.

Die so erhaltene Dispersion der Nanopartikel wies einen Gehalt von protischen Lösemitteln (Isopropanol, Hexanol) von weniger als 1 Gew.-% auf. Der Festkörpergehalt betrug 38,1 Prozent. Der Gehalt an blockierten Isocyanatgruppen betrug 3,21 Gew.-%.

Die Reaktivität der erhaltenen Dispersion gegenüber freien Isocyanaten war äußerst gering. Eine Mischung von 9 Gewichtsteilen Basonat ® HI 190 der Firma BASF Aktiengesellschaft , 0,5 Gewichtsteilen Butylacetat, 0,5 Gewichtsteilen Solvent Naphta und 10 Gewichtsteilen der Dispersion der Nanopartikel war auch nach 6 Tagen bei Raumtemperatur stabil und zeigte keinerlei Vergelung.

**Beispiele 8 und 9**

**Die Herstellung modifizierter Nanopartikel und ihrer Dispersion in aprotischen Lösemitteln**

Beispiel 7 wurde wiederholt mit dem Unterschied, dass unterschiedliche Mengen Solvent Naphta eingesetzt wurden: In Beispiel 8 wurden 5,3 Gewichtsteile Solvent Naphta statt 10,3, in Beispiel 9 wurden 3,7 Gewichtsteile Solvent Naphta statt 10,3 Gewichtsteilen eingesetzt.

Dadurch wurden die in Tabelle 1 dargestellten, deutlich erhöhten Festkörperanteile erreicht. Sieht man von den unterschiedlichen Festkörpergehalten sowie den daraus resultierenden anderen Kenngrößen (beispielsweise Gehalt an blockierten Isocyanatgruppen) ab, so ergeben sich hinsichtlich der anwendungstechnischen Aspekte die gleichen hervorragenden Materialeigenschaften.

**Tabelle 1**

| Beispiel | Festkörpergehalt [Gew.-%] | Gehalt anblockierte Isocyanatgruppen Gehalt [Gew.-%] |
|---|---|---|
| 8 | 52,2 | 4,19 |
| 9 | 62,2 | 4,68 |

**Patentansprüche**

**1.** Oberflächenmodifizierte Nanopartikel, deren Oberfläche nahezu verständig oder vollständig mit

(A) modifizierenden Gruppen, die

- über mindestens eine verküpfende funktionelle Gruppe (a) kovalent an die Oberfläche gebunden sind und
- mindestens eine abstandshaltende, inerte Gruppe (b) und
- mindestens eine, über die Gruppe (b) mit der Gruppe (a) verbundene, reaktive funktionelle Gruppe (c), die gegenüber den reaktiven funktionellen Gruppen der zu modifizierenden Oberfläche inert ist, enthalten,

(B) modifizierenden Gruppen, die

- über mindestens eine verküpfende funktionelle Gruppen (a) kovalent an die Oberfläche gebunden sind und
- mindestens eine über die Gruppe (a) mit der Oberfläche verbundene, inerte Gruppe (d) mit einem kleineren hydrodynamischen Volumen $V_H$ als das der abstandshaltenden, inerten Gruppe (Ab) enthalten, und

(C) modifizierenden Gruppen, die

- über mindestens eine verküpfende funktionelle Gruppe (a), die mindestens ein Siliziumatom enthält, kovalent an die Oberfläche gebunden sind,
- mindestens eine über die Gruppe (a) mit der Oberfläche verbundene, inerte Gruppe (e) enthalten und
- ein kleineres hydrodynamisches Volumen $V_H$ als die modifizierende Gruppe (A) aufweisen

bedeckt ist.

**2.** Oberflächenmodifizierte Nanopartikel nach Anspruch 1, **dadurch gekennzeichnet, dass** das hydrodynamische Volumen $V_H$ mit Hilfe der Photonenkorrelationsspektroskopie bestimmbar oder über die Beziehung

$$V_H = (r_{cont}/2)^3,$$

worin $r_{cont}$ die effektive Konturlänge eines Moleküls bedeutet, abschätzbar ist.

**3.** Oberflächenmodifizierte Nanopartikel nach Anspruch 1 oder 2, **dadurch gekennzeichnet, dass** die reaktiven funktionellen Gruppen der zu modifizierenden Oberfläche Hydroxylgruppen sind.

**4.** Oberflächenmodifizierte Nanopartikel nach einem der Ansprüche 1 bis 3, **dadurch gekennzeichnet, dass** die verküpfende funktionelle Gruppe (Aa) mindestens ein Siliziumatom enthält.

**5.** Oberflächenmodifizierte Nanopartikel nach einem der Ansprüche 1 bis 4, **dadurch gekennzeichnet, dass** die abstandshaltende, inerte Gruppe (Ab) ein mindestens zweibindiger organischer Rest R ist.

**6.** Oberflächenmodifizierte Nanopartikel nach einem der Ansprüche 1 bis 5, **dadurch gekennzeichnet, dass** die reaktive funktionelle Gruppe (Ac) thermisch und/oder mit aktinischer Strahlung aktivierbar ist.

**7.** Oberflächenmodifizierte Nanopartikel nach Anspruch 6, **dadurch gekennzeichnet, dass** die thermisch aktivierbare, reaktive funktionelle Gruppe (Ac) eine blockierte Isocyanatgruppe ist und die mit aktinischer Strahlung aktivierbare, reaktive funktionelle Gruppe (Ac) aus der Gruppe, bestehend aus Gruppen, enthaltend mindestens eine Kohlenstoff-Kohlenstoff-Mehrfachbindung, ausgewählt wird.

8. Oberflächenmodifizierte Nanopartikel nach einem der Ansprüche 1 bis 7, **dadurch gekennzeichnet, dass** die verküpfende funktionelle Gruppe (Ba) aus der Gruppe, bestehend aus Ether-, Thioether-, Carbonsäureester-, Thiocarbonsäureester-, Carbonat-, Thiocarbonat-, Phosphorsäureester-, Thiophosphorsäureester-, Phosphonsäureester-, Thiophosphonsäureester-, Phosphit-, Thiophosphit-, Sulfonsäureester-, Amid-, Amin-, Thioamid-, Phosphorsäureamid-, Thiophosphorsäureamid-, Phosphonsäureamid-, Thiophosphonsäureamid-, Sulfonsäureamid-, Imid-, Hydrazid-, Urethan-, Harnstoff-, Thioharnstoff-, Carbonyl-, Thiocarbonyl-, Sulfon- oder Sulfoxidgruppen, ausgewählt wird.

9. Oberflächenmodifizierte Nanopartikel nach einem der Ansprüche 1 bis 8, **dadurch gekennzeichnet, dass** die inerte Gruppe (Bd) und die inerte Gruppe (Ce) einbindige organische Reste $R^2$ sind.

10. Oberflächenmodifizierte Nanopartikel nach Anspruch 9, **dadurch gekennzeichnet, dass** die einbindigen organischen Reste $R^2$ aus der Gruppe, bestehend aus aliphatischen, cycloaliphatischen, aromatischen, aliphatisch-cycloaliphatischen, aliphatisch-aromatischen, cycloaliphatisch-aromatischen oder aliphatisch-cycloaliphatisch-aromatischen Resten, ausgewählt werden.

11. Oberflächenmodifizierte Nanopartikel nach einem der Ansprüche 1 bis 10, **dadurch gekennzeichnet, dass** die inerten Gruppen (Ab), (Bd) und (Ce) mindestens eine mindestens zweibindige funktionelle Gruppe und/oder mindestens einen Substituenten enthalten.

12. Oberflächenmodifizierte Nanopartikel nach einem der Ansprüche 1 bis 11, herstellbar durch die Umsetzung der reaktiven funktionellen Gruppen der Oberfläche von zu modifizierenden Nanopartikeln mit

    (A) mindestens einem Modifizierungsmittel, enthaltend

        - mindestens eine reaktive funktionelle Gruppe (a), die gegenüber den reaktiven funktionellen Gruppen der zu modifizierenden Oberfläche reaktiv ist,
        - mindestens eine abstandshaltende, inerte Gruppe (b) und
        - mindestens eine, über die Gruppe (b) mit der Gruppe (a) verbundene, reaktive funktionelle Gruppe (c), die gegenüber den reaktiven funktionellen Gruppen der zu modifizierenden Oberfläche inert ist,

    (B) mindestens einem Modifizierungsmittel, enthaltend

        - mindestens eine reaktive funktionelle Gruppe (a), die gegenüber den reaktiven funktionellen Gruppen der zu modifizierenden Oberfläche reaktiv ist, und
        - mindestens eine inerte Gruppe (d) mit einem kleineren hydrodynamischen Volumen $V_H$ als das der abstandshaltenden, inerten Gruppe (Ab), sowie

    (C) mindestens einem Modifizierungsmittel mit einem kleineren hydrodynamischen Volumen $V_H$ als das Modifizierungsmittel (A), enthaltend

        - mindestens eine reaktive funktionelle Gruppe (a), die mindestens ein Siliziumatom enthält und gegenüber den reaktiven funktionellen Gruppen der zu modifizierenden Oberfläche reaktiv ist, und
        - mindestens eine inerte Gruppe (e).

13. Oberflächenmodifizierte Nanopartikel nach Anspruch 12, **dadurch gekennzeichnet, dass** das Modifizierungsmittel (A) aus der Gruppe, bestehend aus Silanen der allgemeinen Formel II:

$$[(R^2)_o(R)_{3-o}Si]_m R(Ac)_n \qquad (II),$$

worin die Indizes und die Variablen die folgende Bedeutung haben:

    m und n ganze Zahlen von 1 bis 6;
    o 0, 1 oder 2;
    Ac thermisch und/oder mit aktinischer Strahlung aktivierbare Gruppe, wie vorstehend definiert;
    R mindestens zweibindiger organischer Rest, wie vorstehend definiert;

$R^2$ einbindiger organischer Rest, wie vorstehend definiert, und
$R^3$ hydrolysierbares Atom oder hydrolysierbare Gruppe;

ausgewählt wird.

**14.** Oberflächenmodifizierte Nanopartikel nach Anspruch 13, **dadurch gekennzeichnet, dass** das hydrolysierbare Atom $R^3$ aus der Gruppe, bestehend aus Wasserstoffatomen, Fluoratomen, Chloratomen und Bromatomen und die hydrolysierbare Gruppe $R^3$ aus der Gruppe, bestehend aus Hydroxylgruppen und einbindigen organischen Resten $R^4$ ausgewählt werden.

**15.** Oberflächenmodifizierte Nanopartikel nach Anspruch 14, **dadurch gekennzeichnet, dass** der einbindige organische Rest $R^4$ aus der Gruppe, bestehend aus Gruppen der allgemeinen Formel III:

$$\text{-Y- R2} \qquad \text{(III),}$$

worin die Variable Y für ein Sauerstoffatom oder eine Carbonylgruppe, Carbonyloxygruppe, Oxycarbonylgruppe, Aminogruppe -NH- oder sekundäre Aminogruppe $-NR^2-$ steht und die Variable $R^2$ die vorstehend angegebene Bedeutung hat; ausgewählt wird.

**16.** Oberflächenmodifizierte Nanopartikel nach einem der Ansprüche 13 bis 15, **dadurch gekennzeichnet, dass** die Silane (A) der allgemeinen Formel **II** erhältlich sind durch

(1) die Umsetzung von Polyisocyanaten mit Blockierungsmitteln und mit Silanen der allgemeinen Formel IV:

$$[(R^2)_o(R^3)_{3-o}Si]_mRZ \qquad \text{(IV),}$$

worin die Variable Z für eine isocyanatreaktive funktionelle Gruppe steht und die Variablen R, $R^2$ und $R^3$ die vorstehend angegebene Bedeutung haben; oder
(2) die Umsetzung von Verbindungen der allgemeinen Formel V:

$$(Ac)_nR\text{-}Z \qquad \text{(V),}$$

worin der Index n und die Variablen Ac, R und Z die vorstehend angegebene Bedeutung haben; mit Silanen der allgemeinen Formel VI:

$$[(R^2)_o(R^3)_{3-o}Si]_mR\text{-NCO} \qquad \text{(VI),}$$

worin der Index m und die Variablen R, $R^2$ und $R^3$ die vorstehend angegebene Bedeutung haben.

**17.** Oberflächenmodifizierte Nanopartikel nach einem der Ansprüche 12 bis 16, **dadurch gekennzeichnet, dass** das Modifizierungsmittel (B) aus der Gruppe, bestehend aus hydroxylgruppenhaltigen Verbindungen allgemeinen Formel VII:

$$R^2\text{-OH} \qquad \text{(VII),}$$

worin die Variable $R^2$ die vorstehend angegebene Bedeutung hat, ausgewählt wird.

**18.** Oberflächenmodifizierte Nanopartikel nach Anspruch 17, **dadurch gekennzeichnet, dass** die hydroxylgruppenhaltigen Verbindungen der allgemeinen Formel VII primäre aliphatische Alkohole sind.

**19.** Oberflächenmodifizierte Nanopartikel nach einem der Ansprüche 12 bis 18, **dadurch gekennzeichnet, dass** das Modifizierungsmittel (C) aus der Gruppe, bestehend aus Silanen der allgemeinen Formel VIII:

$$(R^2)_{4-p}Si(R^3)_p \qquad \text{(VIII),}$$

worin der Index p = 1, 2 oder 3 und die Variablen $R^2$ und $R^3$ die vorstehend angegebene Bedeutung haben, ausgewählt wird.

**20.** Oberflächenmodifizierte Nanopartikel nach einem der Ansprüche 1 bis 19, **dadurch gekennzeichnet, dass** die zu modifizierenden Nanopartikel aus der Gruppe, bestehend aus Metallen, Verbindungen von Metallen und organischen Verbindungen, ausgewählt werden.

**21.** Oberflächenmodifizierte Nanopartikel nach Anspruch 20, **dadurch gekennzeichnet, dass** die Metalle aus der dritten bis fünften Hauptgruppe, der dritten bis sechsten sowie der ersten und zweiten Nebengruppe des Periodensystems der Elemente sowie den Lanthaniden, ausgewählt werden.

**22.** Oberflächenmodifizierte Nanopartikel nach Anspruch 20 oder 21, **dadurch gekennzeichnet, dass** es sich bei den Verbindungen der Metalle um Oxide, Oxidhydrate, Sulfate, Hydroxide oder Phosphate handelt.

**23.** Verfahren zur Herstellung von oberflächenmodifizierten Nanopartikeln gemäß einem der Ansprüche 1 bis 22, **dadurch gekennzeichnet, dass** die zu modifizierenden Nanopartikel in einer ersten Verfahrensstufe mit mindestens einem Modifizierungsmittel (A) sowie in einer zweiten Verfahrensstufe mit mindestens einem Modifizierungsmittel (B) und in einer dritten Verfahrensstufe mit mindestens einem Modifizierungsmittel (C) oder in der zweiten Verfahrensstufe mit mindestens einem Modifizierungsmittel (C) und in der dritten Verfahrensstufen mit mindestens einem Modifizierungsmittel (B) oder in der zweiten Verfahrensstufe mit mindestens einem Modifizierungsmittel (B) und mindestens einem Modifizierungsmittel (C) umgesetzt werden.

**24.** Verfahren nach Anspruch 23, **dadurch gekennzeichnet, dass** die Modifizierungsmittel (A), (B) und (C) in einer Menge eingesetzt werden, die für die nahezu vollständige oder vollständige Bedeckung der Oberfläche der zu modifizierenden Nanopartikel ausreichend ist.

**25.** Verfahren zur Herstellung modifizierter Nanopartikel gemäß einem der Ansprüche 13 bis 22, **dadurch gekennzeichnet, dass** mindestens ein Modifizierungsmittel (A) der allgemeinen Formel II und mindestens ein Modifizierungsmittel (C) der allgemeinen Formel VIII miteinander hydrolysiert und kondensiert werden, wonach man die resultierenden Polykondensate mit mindestens einem Modifizierungsmittel (B) umsetzt.

**26.** Dispersion, enthaltend oberflächenmodifizierte Nanopartikel gemäß einem der Ansprüche 1 bis 22 und/oder nach dem Verfahren gemäß einem der Ansprüche 23 bis 25 hergestellte oberflächenmodifizierte Nanopartikel in aprotischen Lösemitteln und/oder Reaktivverdünnern.

**27.** Dispersion nach Anspruch 26, **dadurch gekennzeichnet, dass** die aprotischen Lösemittel und/oder Reaktiverdünner bezüglich der modifizierenden Gruppen (A) und (B) einen Flory-Huggins-Parameter $\chi > 0{,}5$ haben.

**28.** Dispersion nach Anspruch 26 oder 27, **dadurch gekennzeichnet, dass** sie bezogen auf ihre Gesamtmenge, einen Festkörpergehalt von mindestens 30 Gew.-% aufweist.

**29.** Dispersion nach Anspruch 28, **dadurch gekennzeichnet, dass** sie mindestens einen Zusatzstoff, ausgewählt aus der Gruppe, bestehend aus polymeren und oligomeren Bindemitteln, Vernetzungsmitteln, farb- und/oder effektgebenden Pigmenten, organischen und anorganischen, transparenten oder opaken Füllstoffen, sonstigen von den erfindungsgemäßen Nanopartikeln verschiedenen Nanopartikeln, UV-Absorbem, Lichtschutzmitteln, Radikalfängern, Entlüftungsmitteln, Slipadditiven, Polymerisationsinhibitoren, Photoinitiatoren, Initiatoren der radikalischen oder kationischen Polymerisation, Entschäumern, Emulgatoren, Netz- und Dipergiermitteln, Haftvermittlern, Verlaufmitteln, filmbildenden Hilfsmitteln, Sag control agents (SCA), rheologiesteuernden Additiven (Verdicker), Flammschutzmitteln, Sikkativen, Trockungsmitteln, Hautverhinderungsmitteln, Korrosionsinhibitoren, Wachsen und Mattierungsmitteln; enthält.

**30.** Verwendung der oberflächenmodifizierten Nanopartikel gemäß einem der Ansprüche 1 bis 22, der nach dem Verfahren gemäß einem der Ansprüche 23 bis 25 hergestellten oberflächenmodifizierten Nanopartikel und der Dispersion gemäß einem der Ansprüche 26 bis 29 zur Herstellung von Beschichtungsstoffen, Klebstoffen, Dichtungsmassen, Compounds auf der Basis technischer Kunststoffe und härtbaren Massen.

**Claims**

**1.** Surface-modified nanoparticles whose surface is covered completely or near-completely with

(A) modifying groups which

- are attached covalently to the surface via at least one linking functional group (a) and
- contain at least one inert spacer group (b) and
- contain at least one reactive functional group (c) which is connected via the group (b) to the group (a) and is inert toward the reactive functional groups of the surface to be modified,

(B) modifying groups which

- are attached covalently to the surface via at least one linking functional group (a) and
- contain at least one inert group (d) attached to the surface via group (a) having a smaller hydrodynamic volume $V_H$ than the inert spacer group (Ab), and

(C) modifying groups which

- are attached covalently to the surface via at least one linking functional group (a) which contains at least one silicon atom,
- contain at least one inert group (e) attached to the surface via group (a), and
- have a smaller hydrodynamic volume $V_H$ than the modifying group (A).

2. Surface-modified nanoparticles according to Claim 1, **characterized in that** the hydrodynamic volume $V_H$ can be determined by means of photon correlation spectroscopy or estimated using the equation

$$V_H = (r_{cont}/2)^3$$

in which $r_{cont}$ is the effective contour length of a molecule.

3. Surface-modified nanoparticles according to Claim 1 or 2, **characterized in that** the reactive functional groups of the surface to be modified are hydroxyl groups.

4. Surface-modified nanoparticles according to any of Claims 1 to 3, **characterized in that** the linking functional group (Aa) contains at least one silicon atom.

5. Surface-modified nanoparticles according to any of Claims 1 to 4, **characterized in that** the inert spacer group (Ab) is an at least divalent organic radical R.

6. Surface-modified nanoparticles according to any of Claims 1 to 5, **characterized in that** the reactive functional group (Ac) is activable thermally and/or with actinic radiation.

7. surface-modified nanoparticles according to Claim 6, **characterized in that** the thermally activable reactive functional group (Ac) is a blocked isocyanate group and the reactive functional group (Ac) which can be activated with actinic radiation is selected from the group consisting of groups containing at least one carbon-carbon multiple bond.

8. Surface-modified nanoparticles according to any of Claims 1 to 7, **characterized in that** the linking functional group (Ba) is selected from the group consisting of ether, thioether, carboxylate, thiocarboxylate, carbonate, thiocarbonate, phosphate, thiophosphate, phosphonate, thiophosphonate, phosphite, thiophosphite, sulfonate, amide, amine, thioamide, phosphoramide, thiophosphoramide, phosphonamide, thiophosphonamide, sulfonamide, imide, hydrazide, urethane, urea, thiourea, carbonyl, thiocarbonyl, sulfone and sulfoxide groups.

9. Surface-modified nanoparticles according to any of Claims 1 to 8, **characterized in that** the inert group (Bd) and the inert group (Ce) are monovalent organic radicals $R^2$.

10. Surface-modified nanoparticles according to Claim 9, **characterized in that** the monovalent organic radicals $R^2$ are selected from the group consisting of aliphatic, cycloaliphatic, aromatic, aliphatic-cycloaliphatic, aliphatic-aromatic, cycloaliphatic-aromatic, and aliphatic-cycloaliphatic-aromatic radicals.

**11.** Surface-modified nanoparticles according to any of Claims 1 to 10, **characterized in that** the inert groups (Ab), (Bd), and (Ce) contain at least one at least divalent functional group and/or at least one substituent.

**12.** Surface-modified nanoparticles according to any of Claims 1 to 11, preparable by reacting the reactive functional groups of the surface of nanoparticles for modification with

(A) at least one modifier containing

- at least one reactive functional group (a) which is reactive toward the reactive functional groups of the surface to be modified,
- at least one inert spacer group (b) and
- at least one reactive functional group (c) which is connected via the group (b) to the group (a) and is inert toward the reactive functional groups of the surface to be modified,

(B) at least one modifier containing

- at least one reactive functional group (a) which is reactive toward the reactive functional groups of the surface to be modified, and
- at least one inert group (d) having a smaller hydrodynamic volume $V_H$ than the inert spacer group (Ab), and also

(C) at least one modifier having a smaller hydrodynamic volume $V_H$ than the modifier (A), containing

- at least one reactive functional group (a) which contains at least one silicon atom and is reactive toward the reactive functional groups of the surface to be modified, and
- at least one inert group (e).

**13.** Surface-modified nanoparticles according to Claim 12, **characterized in that** the modifier (A) is selected from the group consisting of silanes of the general formula II:

$$[(R^2)_o R^3)_{3-o}Si]_m R(Ac)_n \qquad (II)$$

in which the indices and the variables have the following definitions:

m and n are integers from 1 to 6;
o is 0, 1 or 2;
Ac is a group activable thermally and/or with actinic radiation, as defined above;
R is an at least divalent organic radical, as defined above;
$R^2$ is a monovalent organic radical, as defined above; and
$R^3$ is a hydrolyzable atom or group.

**14.** Surface-modified nanoparticles according to Claim 13, **characterized in that** the hydrolyzable atom $R^3$ is selected from the group consisting of hydrogen atoms, fluorine atoms, chlorine atoms, and bromine atoms and the hydrolyzable group $R^3$ is selected from the group consisting of hydroxyl groups and monovalent organic radicals $R^4$.

**15.** Surface-modified nanoparticles according to Claim 14, **characterized in that** the monovalent organic radical $R^4$ is selected from the group consisting of groups of the general formula III:

$$-Y-R2 \qquad (III)$$

in which the variable Y stands for an oxygen atom or a carbonyl group, carbonyloxy group, oxycarbonyl group, amino group -NH- or secondary amino group $-NR^2-$ and the variable $R^2$ is as defined above.

**16.** Surface-modified nanoparticles according to any of Claims 13 to 15, **characterized in that** the silanes (A) of the general formula II are obtainable by

(1) reacting polyisocyanates with blocking agents and with silanes of the general formula IV:

$$[(R^2)_o(R^3)_{3-o}Si]_mRZ \qquad (IV)$$

in which the variable Z stands for an isocyanate-reactive functional group and the variables R, $R^2$ and $R^3$ are as defined above; or
(2) reacting compounds of the general formula V:

$$(Ac)_nR\text{-}Z \qquad (V)$$

in which the index n and the variables Ac, R, and Z are as defined above with silanes of the general formula VI:

$$[(R^2)_o(R^3)_{3-o}Si]_mR\text{-}NCO \qquad (VI)$$

in which the index m and the variables R, $R^2$ and $R^3$ are as defined above.

17. Surface-modified nanoparticles according to any of Claims 12 to 16, **characterized in that** the modifier (B) is selected from the group consisting of hydroxyl-containing compounds of the general formula VII:

$$R^2\text{-}OH \qquad (VII)$$

in which the variable $R^2$ is as defined above.

18. Surface-modified nanoparticles according to Claim 17, **characterized in that** the hydroxyl-containing compounds of the general formula VII are primary aliphatic alcohols.

19. Surface-modified nanoparticles according to any of Claims 12 to 18, **characterized in that** the modifier (C) is selected from the group consisting of silanes of the general formula VIII:

$$(R^2)_{4-p}Si(R^3)_p \qquad (VIII)$$

in which the index p = 1, 2 or 3, and the variables $R^2$ and $R^3$ are as defined above.

20. Surface-modified nanoparticles according to any of Claims 1 to 19, **characterized in that** the nanoparticles for modification are selected from the group consisting of metals, compounds of metals, and organic compounds.

21. Surface-modified nanoparticles according to Claim 20, **characterized in that** the metals are selected from main groups three to five and transition groups three to six and one and two of the periodic system of the elements, plus the lanthanoids.

22. Surface-modified nanoparticles according to Claim 20 or 21, **characterized in that** the compounds of the metals are oxides, oxide hydrates, sulfates, hydroxides or phosphates.

23. Process for preparing surface-modified nanoparticles according to any of Claims 1 to 22, **characterized in that** the nanoparticles for modification are reacted in a first stage with at least one modifier (A) and also in a second stage with at least one modifier (B) and in a third stage with at least one modifier (C) or in the second stage with at least one modifier (C) and in the third stage with at least one modifier (B) or in the second stage with at least one modifier (B) and at least one modifier (C).

24. Process according to Claim 23, **characterized in that** the modifiers (A), (B), and (C) are used in an amount which is sufficient for the complete or near-complete coverage of the surface of the nanoparticles for modification.

25. Process for producing modified nanoparticles according to any of Claims 13 to 22, **characterized in that** at least one modifier (A) of the general formula II and at least one modifier (C) of the general formula VIII are jointly hydrolyzed and condensed and then the resultant polycondensates are reacted with at least one modifier (B).

26. Dispersion comprising surface-modified nanoparticles according to any of Claims 1 to 22 and/or surface-modified nanoparticles prepared by the process according to any of Claims 23 to 25 in aprotic solvents and/or reactive diluents.

27. Dispersion according to Claim 26, **characterized in that** the aprotic solvents and/or reactive diluents have with regard to the modifying groups (A) and (B) a Flory-Huggins parameter $\chi > 0.5$.

**28.** Dispersion according to Claim 26 or 27, **characterized in that** it has, based on its total amount, a solids content of at least 30% by weight.

**29.** Dispersion according to Claim 28, **characterized in that** it comprises at least one additive selected from the group consisting of polymeric and oligomeric binders, crosslinking agents, color and/or effect pigments, organic and inorganic, transparent or opaque fillers, other nanoparticles different than the nanoparticles of the invention, UV absorbers, light stablizers, free-radical scavengers, devolatilizers, slip additives, polymerization inhibitors, photoinitators, initiators of free-radical or cationic polymerization, defoamers, emulsifiers, wetting agents, dispersants, adhesion promoters, leveling agents, film formation auxiliaries, sag control agents (SCAs), rheological control additives (thickeners), flame retardants, siccatives, dryers, antiskinning agents, corrosion inhibitors, waxes, and flatting agents.

**30.** Use of the surface-modified nanoparticles according to any of Claims 1 to 22, of the surface-modified nanoparticles prepared by the process according to any of Claims 23 to 25, and of the dispersion according to any of Claims 26 to 29 for producing coating materials, adhesives, sealants, compounds based on engineering plastics, and curable compositions.

**Revendications**

**1.** Nanoparticules modifiées en surface, dont la surface est totalement ou presque totalement couverte avec

(A) des groupes modificateurs qui

- sont liés par covalence à la surface par au moins un groupe fonctionnel de liaison (a) et
- contiennent au moins un groupe inerte d'écartement (b) et
- au moins un groupe fonctionnel réactif (c) relié au groupe (a) par le groupe (b), qui est inerte vis-à-vis des groupes fonctionnels réactifs de la surface à modifier,

(B) des groupes modificateurs qui

- sont liés par covalence à la surface par au moins un groupe fonctionnel de liaison (a) et
- contiennent au moins un groupe inerte (d) lié à la surface par le groupe (a), ayant un plus petit volume hydrodynamique $V_H$ que le groupe inerte d'écartement (Ab), et

(C) des groupes modificateurs qui

- sont liés par covalence à la surface par au moins un groupe fonctionnel de liaison (a) qui contient au moins un atome de silicium,
- contiennent au moins un groupe inerte (e) lié à la surface par le groupe (a) et
- présentent un plus petit volume hydrodynamique $V_H$ que le groupe modificateur (A).

**2.** Nanoparticules modifiées en surface, selon la revendication 1, **caractérisées en ce que** le volume hydrodynamique $V_H$ est déterminable à l'aide de la spectroscopie à corrélation de photons ou peut être évalué au moyen de la relation

$$V_H = (r_{cont}/2)^3,$$

dans laquelle $r_{cont}$ représente la longueur de contour effective d'une molécule.

**3.** Nanoparticules modifiées en surface, selon la revendication 1 ou 2, **caractérisées en ce que** les groupes fonctionnels réactifs de la surface à modifier sont des groupes hydroxy.

**4.** Nanoparticules modifiées en surface, selon l'une quelconque des revendications 1 à 3, **caractérisées en ce que** le groupe fonctionnel de liaison (Aa) contient au moins un atome de silicium.

**5.** Nanoparticules modifiées en surface, selon l'une quelconque des revendications 1 à 4, **caractérisées en ce que** le groupe inerte d'écartement (Ab) est un radical organique R à au moins deux liaisons.

**6.** Nanoparticules modifiées en surface, selon l'une quelconque des revendications 1 à 5, **caractérisées en ce que** le groupe fonctionnel réactif (Ac) est activable thermiquement et/ou par un rayonnement actinique.

**7.** Nanoparticules modifiées en surface, selon la revendication 6, **caractérisées en ce que** le groupe fonctionnel réactif (Ac) activable thermiquement est un groupe isocyanate bloqué et le groupe fonctionnel réactif (Ac) activable par un rayonnement actinique est choisi dans l'ensemble constitué par des groupes contenant au moins une liaison multiple carbone-carbone.

**8.** Nanoparticules modifiées en surface, selon l'une quelconque des revendications 1 à 7, **caractérisées en ce que** le groupe fonctionnel de liaison (Ba) est choisi dans l'ensemble constitué par des groupes éther, thioéther, ester d'acide carboxylique, ester d'acide thiocarboxylique, carbonate, thiocarbonate, ester d'acide phosphorique, ester d'acide thiophosphorique, ester d'acide phosphonique, ester d'acide thiophosphonique, phosphite, thiophosphite, ester d'acide sulfonique, amido, amino, thioamido, phosphoramido, thiophosphoramido, phosphonamido, thiophosphonamido, sulfonamido, imido, hydrazide, uréthane, urée, thiourée, carbonyle, thiocarbonyle, sulfone ou sulfoxyde.

**9.** Nanoparticules modifiées en surface, selon l'une quelconque des revendications 1 à 8, **caractérisées en ce que** le groupe inerte (Bd) et le groupe inerte (Ce) sont des radicaux organiques $R^2$ à une liaison.

**10.** Nanoparticules modifiées en surface, selon la revendication 9, **caractérisées en ce que** les radicaux organiques $R^2$ à une liaison sont choisis dans l'ensemble constitué par des radicaux aliphatiques, cycloaliphatiques, aromatiques, aliphatique-cycloaliphatiques, aliphatique-aromatiques, cycloaliphatique-aromatiques ou aliphatique-cycloaliphatique-aromatiques.

**11.** Nanoparticules modifiées en surface, selon l'une quelconque des revendications 1 à 10, **caractérisées en ce que** les groupes inertes (Ab), (Bd) et (Ce) contiennent au moins un groupe fonctionnel à au moins deux liaisons et/ou au moins une substituant.

**12.** Nanoparticules modifiées en surface, selon l'une quelconque des revendications 1 à 11, pouvant être produites par la réaction des groupes fonctionnels réactifs de la surface de nanoparticles à modifier avec

    (A) au moins un agent modificateur, contenant

        - au moins une groupe fonctionnel réactif (a) qui est réactif vis-à-vis des groupes fonctionnels réactifs de la surface à modifier,
        - au moins un groupe inerte d'écartement (b) et
        - au moins un groupe fonctionnel réactif (c), relié au groupe (a) par le groupe (b), qui est inerte vis-à-vis des groupes fonctionnels réactifs de la surface à modifier,

    (B) au moins un agent modificateur, contenant

        - au moins un groupe fonctionnel réactif (a) qui est réactif vis-à-vis des groupes fonctionnels réactifs de la surface à modifier,
        - au moins un groupe inerte (d) ayant une plus petit volume hydrodynamique $V_H$ que le groupe inerte d'écartement (Ab), ainsi que

    (C) au moins un agent modificateur ayant une plus petit volume hydrodynamique $V_H$ que l'agent modificateur (A), contenant

        - au moins un groupe fonctionnel réactif (a) qui contient au moins un atome de silicium et est réactif vis-à-vis des groupes fonctionnels réactifs de la surface à modifier, et
        - au moins un groupe inerte (e).

**13.** Nanoparticules modifiées en surface, selon la revendication 12, **caractérisées en ce que** l'agent modificateur (A) est choisi dans l'ensemble constitué par des silanes de formule générale II ;

$$[(R^2)_o(R^3)_{3-o}Si]_m(Ac)_n \qquad \text{(II)},$$

dans laquelle les indices et les variables ont les significations suivantes :

m et n représentent des nombres entiers valant de 1 à 6 ;
o vaut 0, 1 ou 2 ;
Ac représente un groupe activable thermiquement et/ou par un rayonnement actinique, tel que défini précédemment ;
R représente un radical organique à au moins deux liaisons, tel que défini précédemment ;
$R^2$ représente un radical organique à une liaison, tel que défini précédemment, et
$R^3$ représente un atome hydrolysable ou un groupe hydrolysable.

14. Nanoparticules modifiées en surface, selon la revendication 13, **caractérisées en ce que** l'atome $R^3$ hydrolysable est choisi dans le groupe constitué par les atomes d'hydrogène, les atomes de fluor, les atomes de chlore et les atomes de brome et le groupe $R^3$ hydrolysable est choisi dans le groupe constitué par les groupes hydroxy et des radicaux organiques $R^4$ à une liaison.

15. Nanoparticules modifiées en surface, selon la revendication 14, **caractérisées en ce que** le radical organique $R^4$ à une liaison est choisi dans l'ensemble constitué par les groupes de formule générale III :

$$\text{-Y- R2} \qquad \text{(III)},$$

dans laquelle la variable Y représente un atome d'oxygène ou un groupe carbonyle, un groupe carbonyloxy, un groupe oxycarbonyle, un groupe amino -NH- ou un groupe amino secondaire -$NR^2$- et la variable $R^2$ à la signification indiquée précédemment.

16. Nanoparticules modifiées en surface, selon l'une quelconque des revendications 13 à 15, **caractérisées en ce que** les silanes (A) de formule générale II peuvent être obtenus par

(1) la réaction de polyisocyanates avec des agents de blocage et avec des silanes de formule générale IV :

$$[(R)^2{}_o(R^3)_{3-o}Si]_m RZ \qquad \text{(IV)},$$

dans laquelle la variable Z représente un groupe fonctionnel réactif avec un isocyanate et les variables R, $R^2$ et $R^3$ ont les significations indiquées précédemment : ou
(2) la réaction de composés de formule générale V :

$$(Ac)_n R\text{-}Z \qquad \text{(V)}$$

dans laquelle l'indice n et les variables Ac, R et Z ont les significations indiquées précédemment ; avec des silanes de formule générale VI :

$$[(R^2)_o(R^3)_{3-o}Si]_m RCO \qquad \text{(VI)},$$

dans laquelle l'indice m et les variables R, $R^2$ et $R^3$ ont les significations indiquées précédemment.

17. Nanoparticules modifiées en surface, selon l'une quelconque des revendications 12 à 16, **caractérisées en ce que** l'agent modificateur (B) est choisi dans l'ensemble constitué par des composés contenant des groupes hydroxy, de formule générale VII :

$$R^2\text{-OH} \qquad \text{(VII)},$$

dans laquelle les variables $R^2$ ont la signification indiquée précédemment.

18. Nanoparticules modifiées en surface, selon la revendication 17, **caractérisées en ce que** les composés contenant des groupes hydroxy, de formule générale VII, sont des alcools aliphatiques primaires.

**19.** Nanoparticules modifiées en surface, selon l'une quelconque des revendications 12 à 18, **caractérisées en ce que** l'agent modificateur (C) est choisi dans le groupe constitué par des silanes de formule générale VIII :

$$(R^2)_{4-p}Si(R^3)_p \qquad \text{(VIII)}$$

dans laquelle l' indice p = 1, 2 ou 3 et les variables $R^2$ et $R^3$ ont les significations indiquées précédemment.

**20.** Nanoparticules modifiées en surface, selon l'une quelconque des revendications 1 à 19, **caractérisées en ce que** les nanoparticules à modifier sont choisies dans le groupe constitué par des métaux, des composés de métaux et des composés organiques.

**21.** Nanoparticules modifiées en surface, selon la revendication 20, **caractérisées en ce que** les métaux sont choisis dans les groupes IIIA à VA, les groupes IIIB à VIB ainsi que les groupes IB et IIB du système périodique des éléments ainsi que des lanthanides.

**22.** Nanoparticules modifiées en surface, selon la revendication 20 ou 21, **caractérisées en ce que** les composés des métaux sont des oxydes, des oxyde-hydrates, des sulfates, des hydroxydes ou des phosphates.

**23.** Procédé pour la production de nanoparticules modifiées en surface, selon l'une quelconque des revendications 1 à 22, **caractérisé en ce qu'**on fait réagir les nanoparticules à modifier, dans une première étape du procédé, avec au moins un agent modificateur (A) ainsi que, dans une deuxième étape du procédé, avec au moins un agent modificateur (B) et, dans une troisième étape du procédé, avec au moins un agent modificateur (C) ou, dans la deuxième étape du procédé, avec au moins un agent modificateur (C) et dans la troisième étape du procédé avec au moins un agent modificateur (B) ou dans la deuxième étape du procédé avec au moins un agent modificateur (B) et au moins un agent modificateur (C).

**24.** Procédé selon la revendication 23, **caractérisé en ce que** les agents modificateurs (A), (B) et (C) sont utilisés en une quantité qui est suffisante pour couvrir totalement ou presque totalement la surface des nanoparticules à modifier.

**25.** Procédé pour la production de nanoparticules modifiées, selon l'une quelconque des revendications 13 à 22, **caractérisé en ce qu'**on hydrolyse et condense l'un avec l'autre au moins une agent modificateur (A) de formule générale II et au moins un agent modificateur (C) de formule générale VIII, à la suite de quoi on fait réagir les produits de polycondensation résultants avec au moins un agent modificateur (B).

**26.** Dispersion, contenant des nanoparticules modifiées en surface, selon l'une quelconque des revendications 1 à 22 et/ou des nanoparticules modifiées en surface, produites selon l'une quelconque des revendications 23 à 25, dans des solvants aprotiques et/ou des diluants réactifs.

**27.** Dispersion selon la revendication 26, **caractérisée en ce que** les solvants aprotiques et/ou les diluants réactifs ont, en ce qui concerne les groupes modificateurs (A) et (B), une paramètre de Flory-Huggins $\chi > 0{,}5$.

**28.** Dispersion selon la revendication 26 ou 27, **caractérisée en ce qu'**elle présente, par rapport à sa quantité totale, une teneur en solides d'au moins 30 % en poids.

**29.** Dispersion selon la revendication 28, **caractérisée en ce qu'**elle contient au moins un additif, choisi dans le groupe constitué par des liants polymères ou oligomères, des agents de réticulation, des pigments colorants et/ou à effet, des charges organiques ou inorganiques, transparentes ou opaques, d'autres nanoparticules différentes des nanoparticules selon l'invention, des absorbeurs UV, des photoprotecteurs, des capteurs de radicaux, des agents de désaération, des lubrifiants, des inhibiteurs de polymérisation, des photoamorceurs, des amorceurs de la polymérisation radicalaire ou cationique, des antimousses, des émulsifiants, des agents mouillants et dispersants, des promoteurs d'adhérence, des agents d'étalement, des adjuvantes filmogènes, des sag control agents (SCA), des additifs ajustant la rhéologie (épaississants), des agents ignifuges, des siccatifs, des desséchants, des agents antipeaux, des agents anticorrosion, des cires et des agents de matité.

**30.** Utilisation des nanoparticules modifiées en surface, selon l'une quelconque des revendications 1 à 22, des nanoparticules modifiées en surface produites selon l'une quelconque des revendications 23 à 25 et de la dispersion selon l'une quelconque des revendications 26 à 29 pour la production de matières de revêtement, d'adhésifs, de la matières d'étanchéité, de compounds à base de matières plastiques industrielles et de matières durcissables.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4652470 A
- US 5998504 A
- EP 0872500 A1
- DE 10064637 A1
- DE 19915502 A1
- EP 0832947 A2
- US 5998504 A1
- EP 1193278 A1
- WO 9749745 A
- WO 9749747 A
- DE 4414032 A1
- GB 1220717 A1
- DE 1618795 A1
- DE 1793785 A1
- CA 2163591 A
- US 4419 A
- US 513 A
- US 4454317 A
- EP 0646608 A
- US 4801675 A
- EP 0183976 A1
- DE 4015155 A1
- EP 0303150 A1
- EP 0496208 A1
- EP 0524500 A1
- EP 0566037 A1
- US 5258482 A
- US 5290902 A
- EP 0649806 A1
- DE 4229183 A1
- EP 0531820 A1
- DE 19910876 A1
- US 4652470 A1
- WO 9952964 A
- DE 19816136 A
- DE 19930665 A1
- DE 19818735 A1
- EP 1193278 A

**In der Beschreibung aufgeführte Nicht-Patentliteratur**

- Roempp Online. Georg Thieme Verlag, 2002
- Makromoleküle. **VON H.-G- ELIAS.** Grundlagen. Hüthig & Wepf Verlag, vol. 1, 51
- Römpp Lexikon Lacke und Druckfarben. Georg Thieme Verlag, 1998, 605, 606
- Römpp Online. Georg Thieme Verlag, 2002
- Römpp Lexikon Lacke und Druckfarben. Georg Thieme Verlag, 1998, 41
- Römpp Lexikon Lacke und Druckfarben. Georg Thieme Verlag, 1998, 491
- Lehrbuch von Johan Bieleman. Wiley-VCH, 1998
- Curing in Seconds with NIR. *Industrial Paint & Powder,* April 2001, 30-33
- Lackiertechnik, NIR-Trocknung im Sekundentakt von Flüssig- und Pulverlacken. *Galvanotechnik,* vol. 90 (11), 3098-3100
- **R. HOLMES, U.V.** Curing Formulations for Printing Inks, Coatings and Paints, SITA Technology. Academic Press, 1984
- **VON R. STEPHEN DAVIDSON.** Exploring the Science, Technology and Applications of U.V. and E.B. Curing. Sita Technology Ltd,
- **VON DIPL.-ING. PETER KLAMANN.** *eltosch System-Kompetenz, UV-Technik, Leitfaden für Anwender,* Oktober 1998